# EUROPEAN PATENT APPLICATION

(11) **EP 1 796 014 A2**
(43) Date of publication of application: **13.06.2007**
(21) Application number: 07005644.5
(22) Date of filing: 15.05.1997
(51) Int. Cl.: G06F 21/00, G06F 3/00, G11C 7/00

(54) **System and method for converting analog signals to digital signals with rights management protection**

(30) Priority: 15.05.1996 US 17722 P; 22.05.1996 US 18132 P; 12.08.1996 US 689606; 12.08.1996 US 689754; 12.08.1996 US 699712; 04.09.1996 WO PCT/US96/14262; 14.02.1997 US 37931 P
(62) Divisional of application: 97927637.5
(71) Applicant: Intertrust Technologies Corp, Sunnyvale CA 94085-3913 (US)
(72) Inventor: Shear, Victor H., Bethesda MD 20814 (US); Sibert, Olin W., Lexington MA 02173-2522 (US); van Wie, David M., Sunnyvale CA 94087 (US); Weber, Robert P., Menlo Park CA 94025 (US)
(74) Representative: Williams, Michael Ian

(57) **Abstract**

A system for converting analog signals to digital signals with rights management protection is disclosed, the system comprising a device configured to receive an analog signal, convert the analog signal to a digital signal, and write the digital signal to a storage medium. The device includes a protected processing environment configured to detect analog control information embedded in the analog signal, generate digital control information based at least in part on the analog control information, and associate the digital control information with the digital signal.

## Description

### Cross-Reference to Related Applications and Patents

The specifications and drawings of the following prior, commonly assigned published patent specifications are incorporated by reference into this patent specification:

PCT Publication No. WO 96/27155 dated 6 September 1996 entitled "Systems And Methods For Secure Transaction Management And Electronic Rights Protection", which is based on PCT application no. PCT/US96/02303 filed 13 February 1996 and U.S. patent application serial no. 08/388,107 of Ginter et al. entitled filed on February 13, 1995 (hereinafter "Ginter et al");

U.S. Patent No 4,827,508 entitled "Database Usage Metering and Protection System and Method" dated May 2, 1989;

U.S. Patent No. 4,977,594 entitled "Database Usage Metering and Protection System and Method" dated December 11, 1990;

U.S. Patent No. 5,050,213 entitled "Database Usage Metering and Protection System and Method" dated September 17, 1991; and

U.S. Patent No. 5,410,598 entitled "Database Usage Metering and Protection System and Method" dated April 25, 1995; and

European Patent No.EP 329681 entitled "Database Usage Metering and Protection System and Method" dated January 17, 1996.

In addition, the specifications and drawings of the following commonly-assigned prior-filed patent specifications are incorporated by reference into this patent application:

PCT Application No. PCT/US96/14262 filed 4 September 1996 entitled "Trusted Infrastructure Support Systems, Methods And Techniques For Secure Electronic Commerce, Electronic Transactions, Commerce Process Control And Automation, Distributed Computing, And Rights Management," which corresponds to U.S. patent application serial no. 08/699,712 filed on August 12, 1996 (hereinafter "Shear et al.");

PCT Application No. filed , 1997 entitled "Steganographic Techniques For Securely Delivering Electronic Digital Rights Management Control Information Over Insecure Communications Channels," which corresponds to U.S. patent application serial no. 08/689,606 of Van Wie and Weber filed on August 12, 1996 (hereinafter "Van Wie and Weber"); and

PCT Application No. filed , 1997 based on U.S. Patent Application serial no.08/689,754 entitled "Systems and Methods Using Cryptography To Protect Secure Computing Environments," of Sibert and Van Wie filed on August 12, 1996 (hereinafter "Sibert and Van Wie").

### FIELD OF THE INVENTION

This invention relates to information protection techniques using cryptography, and more particularly to techniques using cryptography for managing rights to information stored on portable media -- one example being optical media such as Digital Video Disks (also known as "Digital Versatile Disks" and/or "DVDs"). This invention also relates to information protection and rights management techniques having selectable applicability depending upon, for example, the resources of the device being used by the consumer (e.g., personal computer or standalone player), other attributes of the device (such as whether the device can be and/or typically is connected to an information network ("connected" versus "unconnected")), and available rights. This invention further relates, in part, to cooperative rights management -- where plural networked rights management arrangements collectively control a rights management event on one or more of such arrangements. Further, important aspects of this invention can be employed in rights management for electronic information made available through broadcast and/or network downloads and/or use of non-portable storage media, either independent of, or in combination with portable media.

### BACKGROUND OF THE INVENTION

The entertainment industry has been transformed by the pervasiveness of home consumer electronic devices that can play video and/or audio from pre-recorded media. This transformation began in the early 1900s with the invention of the phonograph-which for the first time allowed a consumer to listen to his or her favorite band, orchestra or singer in his or her home whenever he or she wishes. The availability of inexpensive video cassette recorders/players beginning in the early 1980s brought about a profound revolution in the movie and broadcast industries, creating an entirely new home consumer market for films, documentaries, music videos, exercise videos, etc.

The entertainment industry has long searched for optimal media for distributing content to home consumers. The original phonograph cylinders distributed by Thomas Edison and other phonograph pioneers had the advantage that they were difficult to copy, but suffered from various disadvantages such as high manufacturing costs, low resistance to breakage, very limited playback time, relatively low playback quality, and susceptibility to damage from wear, scratching or melting. Later-developed wax and vinyl disks could hold more music material but suffered from many of the same disadvantages. Magnetic tapes, on the other hand, could be manufactured very inexpensively and could hold a large amount of program material (e.g., 2, 4 or even 6 hours of video and/or audio). Such magnetic tapes could reproduce program material at relatively high quality, and were not as susceptible to damage or wearing out. However, despite the many clear advantages that magnetic tape provides over other media, the entertainment industry has never regarded it as an ideal or optimum medium because of its great susceptibility to copying.

Magnetic tape has the very flexible characteristic that it can be relatively easily recorded on. Indeed, the process for recording a magnetic tape is nearly as straightforward as that required for playing back pre-recorded content. Because of the relative ease by which magnetic tape can be recorded, home consumer magnetic tape equipment manufacturers have historically provided dual mode equipment that can both record and play back magnetic tapes. Thus, home audio and video tape players have traditionally had a "record" button that allows a consumer to record his or her own program material on a blank (un-recorded) magnetic tape. While this recording ability has given consumers additional flexibility (e.g., the ability to record a child's first words for posterity, and the ability to capture afternoon soap operas for evening viewing), it has unfortunately also been the foundation of an illegal multi-billion dollar content pirating industry that produces millions of illegal, counterfeit copies every year. This illegal pirating operation-which is international in scope-leeches huge amounts of revenue every year from the world's major entertainment content producers. The entertainment industry must pass along these losses to honest consumers-resulting in higher box office prices, and higher video and audio tape sales and rental prices.

In the mid 1980s, the audio entertainment industry developed the optical compact disk as an answer to some of these problems. The optical compact disk-a thin, silvery plastic platter a few inches in diameter-can hold an hour or more of music or other audio programming in digital form. Such disks were later also used for computer data. The disk can be manufactured very inexpensively, and provides extremely high quality playback that is resistant to noise because of the digital techniques used to record and recover the information. Because the optical disk can be made from plastic, it is light weight, virtually unbreakable, and highly resistant to damage from normal consumer handling (unlike the prior vinyl records that were easily scratched or worn down even by properly functioning phonographs). And, because recording on an optical disk is, so far, significantly more difficult than playing back an optical disk, home consumer equipment providing both recording and playback capabilities is unlikely, in the near future, to be as cost-effective as play-only equipment-greatly reducing the potential for illicit copying. Because of these overwhelming advantages, the music industry has rapidly embraced the new digital compact disk technology-virtually replacing older audio vinyl disk media within the space of a few short years.

Indeed, the threat of widespread and easy unauthorized copying in the absence of rights management technologies apparently has been an important contributing factor to the demise of digital audio tape (DAT) as a media for music distribution and, more importantly, home audio recording. Rightsholders in recorded music vigorously opposed the widespread commercialization of inexpensive DAT technology that lacked rights management capabilities since the quality of the digital recording was completely faithful to the digital source on, for example, music CDs. Of course, the lack of rights management was not the only factor at work, since compared with optical media, tape format made random access difficult, for example, playing songs out of sequence.

The video entertainment industry is on the verge of a revolution similar to that wrought by music CDs based on movies in digital format distributed on high capacity read-only optical media. For example, digital optical disk technology has advanced to the point where it is now possible to digitally record, among other things, a full length motion picture (plus sound) on one side of a 5" plastic optical disk. This same optical disk can accommodate multiple high-quality digital audio channels (e.g., to record multi-channel "sensurround" sound for home theaters and/or to record film dialog in multiple different languages on the same disk). This same technology makes it possible to access each individual frame or image of a movie for still image reproduction or-even more exciting-to provide an unprecedented "random access" playback capability that has never before existed in home consumer equipment. This "random access" playback could be used, for example, to delete violence, foul language or nudity at time of playback so that parents could select a "PG" playback version of an "R" rated film at the press of a button. The "random access" capability also has exciting possibilities in terms of allowing viewers to interact with the pre-recorded content (e.g., allowing a health enthusiast to select only those portions of an exercise video helpful to a particular day's workout). See, for example, "Applications Requirements for Innovative Video Programming," DVD Conference Proceedings (Interactive Multimedia Association, 19-20 October 1995, Sheraton Universal Hotel, Universal City, California).

Non-limiting examples of the DVD family of optical media include:
● DVD (Digital Video Disk, Digital Versatile Disk), a non-limiting example of which includes consumer appliances that play movies recorded on DVD disks;
● DVD-ROM (DVD-Read Only Memory), a non-limiting example of which includes a DVD read-only drive and disk connected to a computer or other appliance;
● DVD-RAM (DVD Random Access Memory), a non-limiting example of which includes a read/write drive and optical media in, for example, consumer appliances for home recording and in a computer or other appliance for the broadest range of specific applications; and
● Any other high capacity optical media presently known or unknown.

"DVDs" are, of course, not limited to use with movies. Like CDs, they may also be used for other kinds of information, for example:
● sound recordings
● software
● databases
● games
● karaoke
● multimedia
● distance learning
● documentation
● policies and manuals
● any kind of digital data or other information
● any combination of kinds of digital data or other information
● any other uses presently known or unknown.

The broad range of DVD uses presents a technical challenge: how can the information content distributed on such disks, which might be any kind or combination of video, sound, or other data or information broadly speaking, be adequately protected while preserving or even maximizing consumer flexibility? One widely proposed requirement for the new technology(mainly within the context of video), is, to the extent copying is permitted at all, to either: (a) allow a consumer to make a first generation copy of the program content for their own use, but prevent the consumer from making "copies of copies", or multi-generational copies of a given property (thus keeping honest people honest); or (b) to allow unlimited copying for those properties that rightsholders do not wish to protect against copying, or which consumers have made themselves.

However, providing only such simplistic and limited copy protection in a non-extensible manner may turn out to be extremely shortsighted-since more sophisticated protection and/or rights management objectives (e.g., more robust and selective application of copy protection and other protection techniques, enablement of pay-per-view models, the ability of the consumer to make use of enhanced functionality such as extracting material or interactivity upon paying extra charges, and receiving credit for redistribution, to name a few) could be very useful now or in the future. Moreover, in optimally approaching protection and rights management objectives, it is extremely useful to take differing business opportunities and threats into account that may relate to information delivered via DVD media, for example, depending upon available resources of the device and/or whether the device is connected or unconnected.

More sophisticated rights management capabilities will also allow studios and others who have rights in movies and/or sound recordings to better manage these important assets, in one example, to allow authorized parties to repurpose pieces of digital film, video and/or audio, whether specific and/or arbitrary pieces, to create derivative works, multimedia games, in one non-limiting example. Solutions proposed to date for protecting DVD content have generally focused solely on limited copy protection objectives and have failed to adequately address or even recognize more sophisticated rights management objectives and requirements. More specifically, one copy protection scheme for the initial generation of DVD appliances and media is based on an encryption method developed initially by Matsushita and the simple CGMA control codes that indicate permitted copying: a one-generation copy, no copies, or unlimited copying.

### SUMMARY OF THE INVENTIONS

Comprehensive solutions for protecting and managing information in systems that incorporate high capacity optical media such as DVD require, among other things, methods and systems that address two broad sets of problems: (a) digital to analog conversion (and vice versa); and (b) the use of such optical media in both connected and unconnected environments. The inventions disclosed herein address these and other problems. For example, in the context of analog to digital conversion (and vice versa), it is contemplated that, in accordance with the present inventions, at least some of the information used to protect properties and/or describe rights management and/or control information in digital form could also be carried along with the analog signal. Devices that convert from one format and/or medium to another can, for example, incorporate some or all of the control and identifying information in the new context(s), or at least not actively delete such information during the conversion process. In addition, the present inventions provide control, rights management and/or identification solutions for the digital realm generally, and also critically important technologies that can be implemented in consumer appliances, computers, and other devices. One objective of the inventions is to provide powerful rights management techniques that are useful in both the consumer electronics and computer technology markets, and that also enable future evolution of technical capabilities and business models. Another non-limiting objective is to provide a comprehensive control, rights management and/or identification solution that remains compatible, where possible, with existing industry standards for limited function copy protection and for encryption.

The present inventions provide rights management and protection techniques that fully satisfy the limited copy protection objectives currently being voiced by the entertainment industry for movies while also flexibly and extensibly accommodating a wide range of more sophisticated rights management options and capabilities.

Some important aspects of the present inventions (that are more fully discussed elsewhere in this application) include:
● Selection of control information associated with information recorded on DVD media (for example, rules and usage consequence control information, that comprise non-limiting example elements of a Virtual Distribution Environment (VDE)) that is based at least in part on class of appliance, for example, type of appliance, available resources and/or rights;
● Enabling such selected control information to be, at least in part, a subset of control information used on other appliances and/or classes of appliance, or completely different control information;
● Protecting information output from a DVD device, such as applying rights management techniques disclosed in Ginter et al. and the present application to the signals transmitted using an IEEE 1394 port (or other serial interface) on a DVD player;
● Creation of protected digital content based on an analog source;
● Reflecting differing usage rights and/or content availability in different countries and/or regions of the world;
● Securely managing information on DVD media such that certain portions may be used on one or more classes of appliance (e.g., a standalone DVD player), while other portions may be used on the same or different classes of appliance (e.g., a standalone DVD player or a PC);
● Securely storing and/or transmitting information associated with payment, auditing, controlling and/or otherwise managing content recorded on DVD media, including techniques related to those disclosed in Ginter et al. and in Shear et al.;
● Updating and/or replacing encryption keys used in the course of appliance operation to modify the scope of information that may be used by appliances and/or classes of appliances;
● Protecting information throughout the creation, distribution, and usage process, for example, by initially protecting information collected by a digital camera, and continuing protection and rights management through the editing process, production, distribution, usage, and usage reporting.
● Allowing "virtual rights machines," consisting of multiple devices and/or other systems that participate and work together in a permanently or in a temporarily connected network to share some or all of the rights management for a single and/or multiple nodes including, for example, allowing resources available in plural such devices and/or other systems, and/or rights associated with plural parties and/or groups using and/or controlling such devices and/or other systems, to be employed in concert (according to rights related rules and controls) so as to govern one or more electronic events on any one or more of such devices and/or other systems, such event governance including, for example: viewing, editing, subsetting, anthologizing, printing, copying, titling, extracting, saving, and/or redistributing rights protected digital content.
● Allowing for the exchange of rights among peer-to-peer relating devices and/or other systems, wherein such devices and/or other systems participate in a temporary or permanently connected network, and wherein such rights are bartered, sold for currency, and/or otherwise exchanged for value and/or consideration where such value and/or consideration is exchanged between such peer-to-peer participating commercial and/or consumer devices and/or other systems.

### General Purpose DVD/Cost-effective Large Capacity Digital Media Rights Protection and Management

The inventions described herein can be used with any large capacity storage arrangement where cost-effective distribution media is used for commercial and/or consumer digital information delivery and DVD, as used herein, should be read to include any such system.

Copy protection and rights management are important in practical DVD systems and will continue to be important in other large capacity storage, playback, and recording systems, presently known or unknown, in the future. Protection is needed for some or all of the information delivered (or written) on most DVD media. Such protection against copying is only one aspect of rights management. Other aspects involve allowing rightsholders and others to manage their commercial interests (and to have them enforced, potentially at a distance in time and/or space) regardless of distribution media and/or channels, and the particular nature of the receiving appliance and/or device. Such rights management solutions that incorporate DVD will become even more significant as future generations of recordable DVD media and appliances come to market. Rightsholders will want to maintain and assert their rights as, for example, video, sound recordings, and other digital properties are transmitted from one device to another and as options for recording become available in the market.

The apparent convergence between consumer appliances and computers, increasing network and modem speeds, the declining cost of computer power and bandwidth, and the increasing capacity of optical media will combine to create a world of hybrid business models in which digital content of all kinds may be distributed on optical media played on at least occasionally connected appliances and/or computers, in which the one-time purchase models common in music CDs and initial DVD movie offerings are augmented by other models, for example, lease, pay per view, and rent to own, to name just few. Consumers may be offered a choice among these and other models from the same or different distributors and/or other providers. Payment for use may happen over a network and/or other communications channel to some payment settlement service. Consumer usage and audit information may flow back to creators, distributors, and/or other participants. The elementary copy protection technologies for DVD now being introduced cannot support these and other sophisticated models.

As writable DVD appliances and media become available, additional hybrid models are possible, including, for example, the distribution of digital movies over satellite and cable systems. Having recorded a movie, a consumer may elect a lease, rental, pay-per-view, or other model if available. As digital television comes to market, the ability of writable DVDs to make faithful copies of on-air programming creates additional model possibilities and/or rights management requirements. Here too, simplistic copy protection mechanisms currently being deployed for the initial read-only DVD technologies will not suffice.

### Encryption Is A Means, Not An End

Encryption is useful in protecting intellectual properties in digital format, whether on optical media such as DVD, on magnetic media such as disk drives, in the active memory of a digital device and/or while being transmitted across computer, cable, satellite, and other kinds of networks or transmission means. Historically, encryption was used to send secret messages. With respect to DVD, a key purpose of encryption is to require the use of a copy control and rights management system in order to ensure that only those authorized to do so by rightsholders can indeed use the content.

But encryption is more of a means, rather than an end. A central issue is how to devise methods for ensuring, to the maximal extent possible, that only authorized devices and parties can decrypt the protected content and/or otherwise use information only to the extent permitted by the rightsholder(s) and/or other relevant parties in the protected content.

### The Present Inventions

The present inventions provide powerful right management capabilities. In accordance with one aspect provided by the present invention, encrypted digital properties can be put on a DVD in a tamper-resistant software "container" such as, for example, a "DigiBox" secure container, together with rules about "no copy" and/or "copy" and/or "numbers of permitted copies" that may apply and be enforced by consumer appliances. These same rules, and/or more flexible and/or different rules, can be enforced by computer devices or other systems that may provide more and/or different capabilities (e.g., editing, excerpting, one or more payment methods, increased storage capability for more detailed audit information, etc.). In addition, the "software container" such as for example, a "DigiBox" secure container, can store certain content in the "clear" (that is, in unencrypted form). For example, movie or music titles, copyright statements, audio samples, trailers, and/or advertising can be stored in the clear and/or could be displayed by any appropriate application or device. Such information could be protected for authenticity (integrity) when available for viewing, copying, and/or other activities. At the same time, valuable digital properties of all kinds-film, video, image, text, software, and multimedia- may be stored at least partially encrypted to be used only by authorized devices and/or applications and only under permitted, for example rightsholder-approved, circumstances.

Another aspect provided in accordance with the present invention (in combination with certain capabilities disclosed in Ginter et al.) is that multiple sets of rules could be stored in the same "container" on a DVD disk. The software then applies rules depending on whether the movie, for example, was to be played by a consumer appliance or computer, whether the particular apparatus has a backchannel (e.g., an on-line connection), the national and/or other legal or geographic region in which the player is located and/or the movie is being displayed, and/or whether the apparatus has components capable of identifying and applying such rules. For example, some usage rules may apply when information is played by a consumer device, while other rules may apply when played by a computer. The choice of rules may be left up to the rightsholder(s) and/or other participants-- or some rules may be predetermined (e.g., based on the particular environment or application). For example, film rightsholders may wish to limit copying and ensure that excerpts are not made regardless of the context in which the property is played. This limitation might be applied only in certain legal or geographic areas. Alternatively, rightsholders of sound recordings may wish to enable excerpts of predetermined duration (e.g., no more than 20 seconds) and that these excerpts are not used to construct a new commercial work. In some cases, governments may require that only "PG" versions of movies and/or the equivalent rating for TV programs may be played on equipment deployed in their jurisdiction, and/or that the applicable taxes, fees and the like are automatically calculated and/or collected if payments related to content recorded on DVD is requested and/or performed (e.g., pay-per-use of a movie, game, database, software product, etc.; and/or orders from a catalog stored at least in part on DVD media, etc.).

In a microprocessor controlled (or augmented) digital consumer appliance, such rules contemplated by the present inventions can be enforced, for example, without requiring more than a relatively few additions to a central, controlling microprocessor (or other CPU, a IEEE 1394 port controller, or other content handling control circuitry), and/or making available some ROM or flash memory to hold the necessary software. In addition, each ROM (or flash or other memory, which such memory may be securely connected to, or incorporated into, such control circuitry in a single, manufactured component) can, in one example, contain one or more digital documents or "certificate(s)" that uniquely identifies a particular appliance, individual identity, jurisdiction, appliance class(es), and/or other chosen parameters. An appliance can, for example, be programmed to send a copy of a digital property to another digital device only in encrypted form and only inside a new, tamper-resistant "software container." The container may also, for example, carry with it a code indicating that it is a copy rather than an original that is being sent. The device may also put a unique identifier of a receiving device and/or class of devices in the same secure container. Consequently, for example, in one particular arrangement, the copy may be playable only on the intended receiving device, class(es) of devices, and/or devices in a particular region in one non-limiting example and rights related to use of such copy may differ according to these and/or other variables.

The receiving device, upon detecting that the digital property is indeed a copy, can, for example, be programmed not to make any additional copies that can be played on a consumer device and/or other class(es) of devices. If a device detects that a digital property is about to be played on a device and/or other class(es) of devices other than the one it was intended for, it can be programmed to refuse to play that copy (if desired).

The same restrictions applied in a consumer appliance can, for example, be enforced on a computer equipped to provide rights management protection in accordance with the present inventions. In this example, rules may specify not to play a certain film and/or other content on any device other than a consumer appliance and/or classes of appliances, for example. Alternatively, these same powerful capabilities could be used to specify different usage rules and payment schemes that would apply when played on a computer (and/or in other appliances and/or classes of appliances), as the rightsholder(s) may desire, for example, different pricing based upon different geographic or legal locales where content is played.

In addition, if "backchannels" are present-for example, set-top boxes with bi-directional communications or computers attached to networks-the present inventions contemplate electronic, independent delivery of new rules if desired or required for a given property. These new rules may, for example, specify discounts, time-limited sales, advertising subsidies, and/or other information if desired. As noted earlier, determination of these independently delivered rules is entirely up to the rightsholder(s) and/or others in a given model.

The following are two specific examples of a few aspects of the present invention discussed above:
1. An Analog To Digital Copying Example
   a) Bob has a VHS tape he bought (or rented) and wants to make a copy for his own use. The analog film has copy control codes embedded so that they do not interfere with the quality of the signal. Bob has a writable DVD appliance that is equipped to provide rights management protection in accordance with the present invention. Bob's DVD recorder detects the control codes embedded in the analog signal (for example, such recorder may detect watermarks and/or fingerprints carrying rights related control and/or usage information), creates a new secure container to hold the content rules and describe the encoded film, and creates new control rules (and/or delivers to a secure VDE system for storage and reporting certain usage history related information such as user name, time, etc.) based on the analog control codes and/or other information it detected and that are then placed in the DigiBox and/or into a secure VDE installation data store such as a secure data base. Bob can play that copy back on his DVD appliance whenever he chooses.
   b) Bob gives the DVD disk he recorded to Jennifer who wishes to play it on computer that has a DVD drive. Her computer is equipped to provide rights management protection in accordance with the present invention. Her computer opens the "DigiBox," detects that this copy is being used on a device different from the one that recorded it (an unauthorized device) and refuses to play the copy.
   c) Bob gives the DVD disk to Jennifer as before, but now Jennifer contacts electronically a source of new rules and usage consequences, which might be the studio, a distributor, and/or a rights and permissions clearinghouse, (or she may have sufficient rights already on her player to play the copy). The source sends a DigiBox container to Jennifer with rules and consequences that permit playing the movie on her computer while at the same time charging her for use, even though the movie was recorded on DVD by Bob rather than by the studio or other value chain participant.
2. A Digital To Analog Copying Example
   a) Jennifer comes home from work, inserts a rented or owned DVD into a player connected to, or an integral part of her TV, and plays the disk. In a completely transparent way, the film is decrypted, the format is converted from digital to analog, and displayed on her analog TV.
   b) Jennifer wishes to make a copy for her own use. She plays the film on an DVD device incorporating rights management protection in accordance with the present invention, that opens the DigiBox secure container, accesses the control information, and decrypts the film. She records the analog version on her VCR which records a high-quality copy.
   c) Jennifer gives the VCR copy to Doug who wishes to make a copy of the analog tape for his own use, but the analog control information forces the recording VCR to make a lower-quality copy, or may prevent copying. In another non-limiting example, more comprehensive rights management information may be encoded in the analog output using the methods and/or systems described in more detail in the above referenced Van Wie and Weber patent application.

In accordance with one aspect provided by this invention, the same portable storage medium, such as a DVD, can be used with a range of different, scaled protection environments providing different protection capabilities. Each of the different environments may be enabled to use the information carried by the portable storage medium based on rights management techniques and/or capabilities supported by the particular environment. For example, a simple, inexpensive home consumer disk player may support copy protection and ignore more sophisticated and complex content rights the player is not equipped to enable. A more technically capable and/or secure platform (e.g., a personal computer incorporating a secure processing component possibly supported by a network connection, or a "smarter" appliance or device) may, for example, use the same portable storage medium and provide enhanced usage rights related to use of the content carried by the medium based on more complicated rights management techniques (e.g., requiring payment of additional compensation, providing secure extraction of selected content portions for excerpting or anthologizing, etc.). For example, a control set associated with the portable storage medium may accommodate a wide variety of different usage capabilities-with the more advanced or sophisticated uses requiring correspondingly more advanced protection and rights management enablement found on some platforms and not others. Lower-capability environments can, as another example, ignore (or not enable or attempt to use) rights in the control set that they don't understand, while higher-capability environments (having awareness of the overall capabilities they provide), may, for example, enable the rights and corresponding protection techniques ignored by the lower-capability environments.

In accordance with another aspect provided by the invention, a media- and platform-independent security component can be scaled in terms of functionality and performance such that the elementary rights management requirements of consumer electronics devices are subsets of a richer collection of functionality that may be employed by more advanced platforms. The security component can be either a physical, hardware component, or a "software emulation" of the component. In accordance with this feature, an instance of medium (or more correctly, one version of the content irrespective of media) can be delivered to customers independently of their appliance or platform type with the assurance that the content will be protected. Platforms less advanced in terms of security and/or technical capabilities may provide only limited rights to use the content, whereas more advanced platforms may provide more expansive rights based on correspondingly appropriate security conditions and safeguards.

In accordance with a further aspect provided by the present invention, mass-produced, inexpensive home consumer DVD players (such as those constructed, for example, with minimum complexity and parts count) can be made to be compatible with the same DVDs or other portable storage media used by more powerful and/or secure platforms (such as, for example, personal computers) without degrading advanced rights management functions the storage media may provide in combination with the more powerful and/or secure platforms. The rights management and protection arrangement provided and supported in accordance with this aspect of the invention thus supports inexpensive basic copy protection and can further serve as a commercial convergence technology supporting a bridging that allows usage in accordance with rights of the same content by a limited resource consumer device while adequately protecting the content and further supporting more sophisticated security levels and capabilities by (a) devices having greater resources for secure rights management, and/or (b) devices having connectivity with other devices or systems that can supply further secure rights management resources. This aspect of the invention allows multiple devices and/or other systems that participate and work together in a permanently or temporarily connected network to share the rights management for at least one or more electronic events (e.g., managed through the use of protected processing environments such as described in Ginter et al.) occuring at a single, or across multiple nodes and further allows the rights associated with parties and/or groups using and/or controlling such multiple devices and/or other systems to be employed according to underlying rights related rules and controls, this allowing, for example, rights available through a corporate executive's device to be combined with or substitute for, in some manner, the rights of one or more subordinate corporate employees when their computing or other devices of these parties are coupled in a temporary networking relationship and operating in the appropriate context. In general, this aspect of the invention allows distributed rights management for DVD or otherwise packaged and delivered content that is protected by a distributed, peer-to-peer rights management.Such distributed rights management can operate whether the DVD appliance or other electronic information usage device is participating permanently or temporarily connected network and whether or not the relationships among the devices and/or other systems participating in the distributed rights management arrangement are relating temporarily or have a more permanent operating relationship. In this way, the same device may have different rights available depending on the context in which that device is operating (e.g., in a corporate environment such as in collaboration with other individuals and/or with groups, in a home environment internally and/or in collaboration with external one or more specified individuals and/or other parties, in a retail environment, in a classroom setting as a student where a student's notebook might cooperate in rights management with a classroom server and/or instructor PC, in a library environment where multiple parties are collaboratively employing differing rights to use research materials, on a factory floor where a hand held device works in collaboration with control equipment to securely and appropriately perform proprietary functions, and so on).

For example, coupling a limited resource device arrangement, such as a DVD appliance, with an inexpensive network computer (NC), or a personal computer (PC), may allow an augmenting (or replacing) of rights management capabilities and/or specific rights of parties and/or devices by permitting rights management to be a result of a combination of some or all of the rights and/or rights management capabilities of the DVD appliance and those of an Network or Personal Computer (NC or PC). Such rights may be further augmented, or otherwise modified or replaced by the availability of rights management capabilities provided by a trusted (secure) remote network rights authority.

These aspects of the present invention can allow the same device, in this example a DVD appliance, to support different arrays, e.g., degrees, of rights management capabilities, in disconnected and connected arrangements and may further allow available rights to result from the availability of rights and/or rights management capabilities resulting from the combination of rights management devices and/or other systems. This may include one or more combinations of some or all of the rights available through the use of a "less" secure and/or resource poor device or system which are augmented, replaced, or otherwise modified through connection with a device or system that is "more" or "differently" secure and/or resource rich and/or possesses differing or different rights, wherein such connection employs rights and/or management capabilities of either and/or both devices as defined by rights related rules and controls that describe a shared rights management arrangement.

In the latter case, connectivity to a logically and/or physically remote rights management capability can expand (by, for example, increasing the available secure rights management resources) and/or change the character of the rights available to the user of the DVD appliance or a DVD appliance when such device is coupled with an NC, personal computer, local server, and/or remote rights authority. In this rights augmentation scenario, additional content portions may be available, pricing may change, redistribution rights may change (e.g., be expanded), content extraction rights may be increased, etc.

Such "networking rights management" can allow for a combination of rights management resources of plural devices and/or other systems in diverse logical and/or physical relationships, resulting in either greater or differing rights through the enhanced resources provided by connectivity with one or more "remote" rights authorities. Further, while providing for increased and/or differing rights management capability and/or rights, such a connectivity based rights management arrangement can support multi-locational content availability, by providing for seamless integration of remotely available content, for example, content stored in remote, Internet world wide web-based, database supported content repositories, with locally available content on one or more DVD discs.

In this instance, a user may experience not only increased or differing rights but may use both local DVD content and supplementing content (i.e., content that is more current from a time standpoint, more costly, more diverse, or complementary in some other fashion, etc.). In such an instance, a DVD appliance and/or a user of a DVD appliance (or other device or system connected to such appliance) may have the same rights, differing, and/or different rights applied to locally and remotely available content, and portions of local and remotely available content may themselves be subject to differing or different rights when used by a user and/or appliance. This arrangement can support an overall, profound increase in user content opportunities that are seamlessly integrated and efficiently available to users in a single content searching and/or usage activity by exploiting the rights management and content resources of plural, connected arrangements.

Such a rights augmenting remote authority may be directly coupled to a DVD appliance and/or other device by modem, or directly or indirectly coupled through the use of an I/O interface, such as a serial 1394 compatible controller (e.g., by communicating between a 1394 enabled DVD appliance and a local personal computer that functions as a smart synchronous or asynchronous information communications interface to such one or more remote authorities, including a local PC or NC or server that serves as a local rights management authority augmenting and/or supplying the rights management in a DVD appliance).

In accordance with yet another aspect provided by this invention, rights provided to, purchased, or otherwise acquired by a participant and/or participant DVD appliance or other system can be exchanged among such peer-to-peer relating devices and/or other systems through the use of one or more permenantly or temporarily networked arrangments. In such a case, rights may be bartered, sold, for currency, otherwise exchanged for value, and/or loaned so long as such devices and/or other systems participate in a rights management system, for example, such as the Virtual Distribution Environment described in Ginter, et al., and employ rights transfer and other rights management capabilities described therein. For example, this aspect of the present invention allows parties to exchange games or movies in which they have purchased rights. Continuing the example, an individual might buy some of a neighbor's usage rights to watch a movie, or transfer to another party credit received from a game publisher for the successful superdistribution of the game to several acquaintances, where such credit is transferred (exchanged) to a friend to buy some of the friend's rights to play a different game a certain number of times, etc.In accordance with yet another aspect provided by this invention, content carried by a portable storage medium such as a DVD is associated with one or more encryption keys and a secure content identifier. The content itself (or information required to use the content) is at least partially cryptographically encrypted-with associated decryption keys being required to decrypt the content before the content can be used. The decryption keys may themselves be encrypted in the form of an encrypted key block. Different key management and access techniques may be used, depending on the platform.

In accordance with still yet another aspect provided by this invention, electronic appliances that "create" digital content (or even analog content) -e.g., a digital camera/video recorder or audio recorder-can be readily equipped with appropriate hardware and/or software so as to produce content that is provided within a secure container at the outset. For example, content recorded by a digital camera could be immediately packaged in a secure container by the camera as it is recording. The camera could then output content already packaged in a secure container(s). This could preclude the need to encapsulate the content at a later point in time or at a later production stage, thus, saving at least one production-process step in the overall implementation of electronic rights management in accordance with the present invention. Moreover, it is contemplated that the very process of "reading" content for use in the rights management environment might occur at many steps along a conventional production and distribution process (such as during editing and/or the so called "pressing" of a master DVD or audio disk, for example). Accordingly, another significant advantage of the present invention is that rights management of content essentially can be extended throughout and across each appropriate content creation, editing, distribution, and usage stages to provide a seamless content protection architecture that protects rights throughout an entire content life cycle.

In one example embodiment, the storage medium itself carries key block decryption key(s) in a hidden portion of the storage medium not normally accessible through typical access and/or copying techniques. This hidden key may be used by a drive to decrypt the encrypted key block-such decrypted key block then being used to selectively decrypt content and related information carried by the medium. The drive may be designed in a secure and tamper-resistant manner so that the hidden keys are never exposed outside of the drive to provide an additional security layer.

In accordance with another example embodiment, a video disk drive may store and maintain keys used to decrypt an encrypted key block. The key block decryption keys may be stored in a drive key store, and may be updatable if the video disk drive may at least occasionally use a communications path provided, for example, by a set top box, network port or other communications route.

In accordance with a further example embodiment, a virtual distribution environment secure node including a protected processing environment such as a hardware-based secure processing unit may control the use of content carried by a portable storage medium such as a digital video disk in accordance with control rules and methods specified by one or more secure containers delivered to the secure node on the medium itself and/or over an independent communications path such as a network.

Certain conventional copy protection for DVD currently envisions CGMA copy protection control codes combined with certain encryption techniques first proposed apparently by Matsushita Corporation. Notwithstanding the limited benefits of this approach to digital property protection, the present invention is capable of providing a supplementary, compatible, and far more comprehensive rights management system while also providing additional and/or different options and solutions. The following are some additional examples of advantageous features provided in accordance with the inventions:
● Strong security to fully answer content supplier needs.
● Value chain management automation and efficiencies including distributed rights protection, "piece of the tick" payment disaggregation to value chain participants, cost-effective micro-transaction management, and superdistribution, including offline micropayment and microtransaction support for at least occasionally connected devices.
● Simplified, more efficient channel management including support for the use of the same content deliverable on limited resource, greater resource, standalone, and/or connected devices.
● Can be used with any medium and application type and/or all forms of content and content models -- not just compressed video and sound as in some prior techniques and supports the use of copies of the same or materially the same content containers across a wide variety of media delivery systems (e.g., broadcast, Internet repository, optical disc, etc) for operation on a wide variety of different electronic appliances (e.g., digital cameras, digital editing equipment, sound recorders, sound editing equipment, movie theater projectors, DVD appliances, broadcast tape players, personal computers, smart televisions, etc).
● Asset management and revenue and/or other consideration maximizing through important new content revenue and/or other consideration opportunities and the enhancement of value chain operating efficiencies.
● Is capable of providing 100% compatibility with the other protection techniques such as, for example, CGMA protection codes and/or Matsushita data scrambling approaches to DVD copy protection.
● Can be employed with a variety of existing data scrambling or protection systems to provide very high degrees of compatibility and/or level of functionality.
● Allows DVD technology to become a reusable, programmable, resource for an unlimited variety of entertainment, information commerce, and cyberspace business models.
● Enables DVD drive and/or semiconductor component manufacturers and/or distributors and/or other value adding participants to become providers of, and rights holders in, the physical infrastructure of the emerging, connected world of the Internet and Intranets where they may charge for the use of a portion (e.g., a portion they provided) of the distributed, physical infrastructure as that portion participates in commercial networks. Such manufacturers and/or distributors and/or other value adding participants can enjoy the revenue benefits resulting from participation in a "piece of the tick" by receiving a small portion of the revenue received as a result of a participating transaction.
● Provides automated internationalization, regionalization, and rights management in that:
   -- DVD content can be supplied with arrays of different rule sets for automatic use depending on rights and identity of the user; and
   -- Societal rights, including taxes, can be handled transparently.

In addition, the DVD rights management method and apparatus of the present invention provides added benefits to media recorders/publishers in that it:
● Works with a current "keep honest people honest" philosophy.
● Can provide 100% compatibility with other protection schemes such as for example, Matsushita data scrambling and/or CGMA encoded discs.
● Can work with and/or supplement other protection schemes to provide desired degree and/or functionality, or can be used in addition to or instead of other approaches to provide additional and/or different functionality and features.
● Provides powerful, extensible rights management that reaches beyond limited copy protection models to rights management for the digitally convergent world.
● Empowers recording/publishing studios to create sophisticated asset management tools.
● Creates important business opportunities through controlled use of studio properties in additional multimedia contexts.
● Uniquely ties internationalization, regionalization, superdistribution, repurposing, to content creation processes and/or usage control.

Other aspects of the present invention provide benefits to other types of rightsholders, such as for example:
● Persistent, transparent protection of digital content-globally, through value chain and process layers.
● Significant reduction in revenue loss from copying and pass-along.
● Converts "pass-along," copying, and many forms of copyright infringement from a strategic business threat to a fundamental business opportunity.
● A single standard for all digital content regardless of media and/or usage locality and other rights variables.
● Major economies of scale and/or scope across industries, distribution channels, media, and content type.
● Can support local usage governance and auditing within DVD players allowing for highly efficient micro-transaction support, including multiparty microtransactions and transparent multiparty microtransactions.
● Empowers rightsholders to employ the broadest range of pricing, business models, and market strategies-as they see fit.

Further aspects of the present invention which may prove beneficial to DVD and other digital medium appliance manufacturers are:
● Capable of providing bit for bit compatibility with existing discs.
● Content type independent.
● Media independent and programmable/reusable.
● Highly portable transition to next generation of appliances having higher density devices and/or a writable DVD and/or other optical media format(s).
● Participation in revenue flow generated using the appliance.
● Single extensible standard for all digital content appliances.
● Ready for the future "convergent" world in which many appliances are connected in the home using, as one example, IEEE 1394 interfaces or other means (e.g., some appliances will be very much like computers and some computers will be very much like appliances).

Aspects of the present inventions provide many benefits to computer and OS manufacturers such as for example:
● Implementation in computers as an extension to the operating system, via for example, at least one transparent plug-in, and does not require modifications to computer hardware and/or operating systems.
● Easy, seamless integration into operating systems and into applications.
● Extremely strong security, especially when augmented with "secure silicon" (i.e., hardware/firmware protection apparatus fabricated on chip).
● Transforms user devices into true electronic commerce appliances.
● Provides a platform for trusted, secure rights management and event processing.
● Programmable for customization to specialized requirements.

Additional features and advantages provided in accordance with the inventions include, for example:
● Information on the medium (for example, both properties and metadata) may be encrypted or not.
● Different information (for example, properties, metadata) may be encrypted using different keys. This provides greater protection against compromise, as well as supporting selective usage rights in the context of a sophisticated rights management system.
● There may be encrypted keys stored on the medium, although this is not required. These keys may be used to decrypt the protected properties and metadata. Encrypted keys are likely to be used because that allows more keying material for the information itself, while still keeping access under control of a single key.
● Multiple sets of encrypted keys may be stored on the medium, either to have different sets of keys associated with different information, or to allow multiple control regimes to use the same information, where each control regime may use one or more different keys to decrypt the set of encrypted keys that it uses.
● To support the ability of the player to access rights managed containers and/or content, a decryption key for the encrypted keys may be hidden on the medium in one or more locations that are not normally accessible. The "not normally accessible" location(s) may be physically enabled for drives installed in players, and disabled for drives installed in computers. The enablement may be different firmware, a jumper on the drive, etc.
● The ability of the player to access rights managed containers and/or content may also be supported by one or more stored keys inside the player that decrypts certain encrypted keys on the medium.
● Keys in a player may allow some players to play different properties than others. Keys could be added to, and/or deleted from the player by a network connection (e.g., to a PC, a cable system, and/or a modem connection to a source of new and/or additional keys and/or key revocation information) or automatically loaded by "playing" a key distribution DVD.
● Controlling computer use may be supported by some or all of the same techniques that control player use of content and/or rights managemnt information.
● Controlling computer use of content and/or rights management information may be supported by having a computer receive, through means of a trusted rights management system, one or more appropriate keys.
● A computer may receive additional keys that permit decryption of certain encrypted keys on the medium.
● A computer may receive additional keys that permit decryption of one or more portions of encrypted data directly. This may permit selective use of information on the medium without disclosing keys (e.g., a player key that decrypts any encrypted keys).

In accordance with further aspects provided by the present invention, a secure "software container" is provided that allows:
● Cryptographically protected encapsulation of content, rights rules, and usage controls.
● Persistent protection for transport, storage, and value chain management.
● Sophisticated rules interface architecture.

Elements can be delivered independently, such as new controls, for example, regarding discount pricing (e.g. sale pricing, specific customer or group discounts, pricing based on usage patterns, etc.) and/or other business model changes, can be delivered after the property has been distributed (this is especially beneficial for large properties or physical distribution media (e.g., DVD, CD-ROM) since redistribution costs may be avoided and consumers may continue to use their libraries of discs). In addition, encrypted data can be located "outside" the container. This can allow, for example, use of data stored independently from the controls and supports "streaming" content as well as "legacy" systems (e.g., CGMS).

### BRIEF DESCRIPTION OF THE DRAWINGS

These and other features and advantages provided in accordance with these inventions may be better and more completely understood by referring to the following detailed description of presently preferred examples in conjunction with the drawings, of which:
Figure 1A shows example home consumer electronics equipment for using portable storage media such as digital video disks;
Figure 1 B shows example secure node equipment for using the same portable storage media but providing more advanced rights management capabilities;
Figure 1C shows an example process for manufacturing protected optical disks;
Figure 2A shows an example architecture of the Figure 1A consumer electronics equipment;
Figure 2B shows an example architecture for the Figure 1 B secure node equipment;
Figure 3 shows example data structures used by the Figure 1A equipment;
Figure 3A and 3B show example control set definitions;
Figures 4A and 4B show example usage techniques provided by the Figure 1A appliance;
Figure 5 shows example data structures used by the Figure 1B secure node for accessing information on the storage medium;
Figure 6 shows an example usage technique performed by the Figure 1 B secure node;
Figure 7 is a block diagram illustrating an example of a special secure software container contained on a DVD;
Figure 8 is a block diagram illustrating an example of a secure container along with the video property content stored on a DVD medium;
Figure 9 is a block diagram illustrating another example of a standard container stored on a DVD medium including an additional container having a more complex rule arrangement for use, for example, with a secure node;
Figure 10 shows an example use of a DVD having a container (i.e., stored on the medium) with a DVD player provided with a secure rights management node, and also shows use of the same DVD with a DVD player that does not have a secure rights management node;
Figure 11 is a block diagram illustrating use of a DVD that does not have a container on a DVD player that is provided with rights management secure node in accordance with the present invention as compared with use of the same DVD with a DVD player that does not have a secure node;
Figures 12-14 show example network configurations; and
Figures 15A-15C show an example virtual rights process.

### DETAILED DESCRIPTION OF PRESENTLY PREFERRED EXAMPLE EMBODIMENTS

### Overall Example Digital Video Disk Usage System

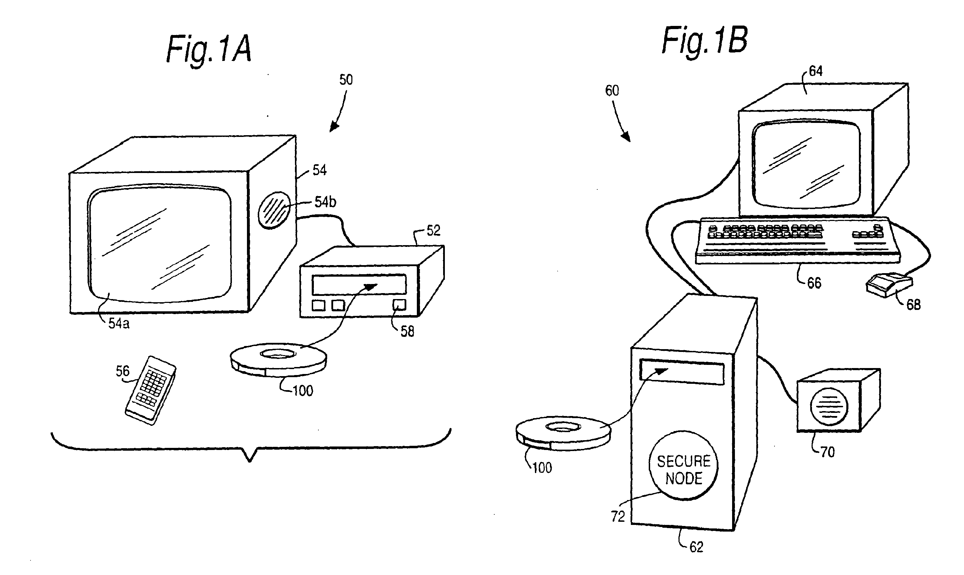

Figure 1A shows example inexpensive mass-produced home consumer electronics equipment 50 for using information stored on a storage medium 100 such as a portable digitally-encoded optical disk (e.g., a digital video disk or "DVD"). Consumer equipment 50 includes a dedicated disk player 52, that in some embodiments, may also have the capability to write optical media (writeable DVD disks, or "DVD-RAM") for example) as well, connected to a home color television set 54. A remote control unit 56 may be used to control the disk player 52 and/or television set 54.

In one example, disk 100 may store a feature length motion picture or other video content. Someone wishing to watch the content stored on disk 100 may purchase or rent the disk, insert the disk into player 52 and use remote control 56 (and/or controls 58 that may be provided on player 52) to control the player to play back the content via home television set 54.

In some embodiments, remote control 56 (and/or controls 58 that may be provided on device 52) may be used to control the recording of a movie, for example. Player 52 reads the digitized video and audio information carried by disk 100, converts it into signals compatible with home color television set 54, and provides those signals to the home color television set.

In some embodiments, television set 54 (and/or a set top box) provide the video signals to be recorded by device 52 on writable optical media, DVD-RAM in one non-limiting example. Television set 54 produces images on screen 54a and produces sounds through loudspeakers 54b based on the signals player 52 provides to the television set.

The same disk 100 may be used by a more advanced platform 60 shown in Figure 1B. Platform 60 may include, for example, a personal computer 62 connected to a display monitor 64, a keyboard 66, a mouse pointing device 68, and a loudspeaker 70. In this example, platform 60 may be able to play back the content stored on disk 100 in the same way as dedicated disk player 52, but may also be capable of more sophisticated and/or advanced uses of the content as enabled by the presence of secure node 72 within the platform. (In some embodiments, platform 60 may also be able to record content on writable optical media, DVD-RAM, in one non-limiting example.) For example, it may be possible, using platform 60 and its secure node 72, to interactively present the motion picture or other content such that the user may input choices via keyboard 66 and/or mouse pointing device 68 that, in real time, change the presentation provided via display 64 and loudspeaker 60.

As one example, the platform 60 user selects from options displayed on display 64 that cause the content presentation sequence to change (e.g., to provide one of a number of different endings, to allow the user to interactively control the flow of the images presented, etc.). Computer 62 may also be capable of using and manipulating digital data including for example computer programs and/or other information stored on disk 100 that player 52 cannot handle.

Secure node 72 provides a secure rights management facility that may, for example, permit more invasive or extensive use of the content stored on disk. For example, dedicated player 52 may prevent any copying of content stored by disk 100, or it may allow the content to be copied only once and never again. Platform 60 including secure node 72, on the other hand, may allow multiple copies of some or all of the same content-but only if certain conditions are met (e.g., the user of equipment 60 falls within a certain class of people, compensation at an agreed on rate is securely provided for each copy made, only certain excerpts of the content are copied, a secure audit trail is maintained and reported for each copy so made, etc.). (In some embodiments, dedicated player 52 may send protected content only to devices authenticated as able to enforce securely rights management rules and usage consequences. In some embodiments, devices may authenticate using digital certificates, one non-limiting example being certificates conforming to the X.509 standard.) Hence, platform 60 including secure node 72 can, in this example, use the content provided by disk 100 in a variety of flexible, secure ways that are not possible using dedicated player 52-or any other appliance that does not include a secure node.

### Example Secure Disk Creation and Distribution Process

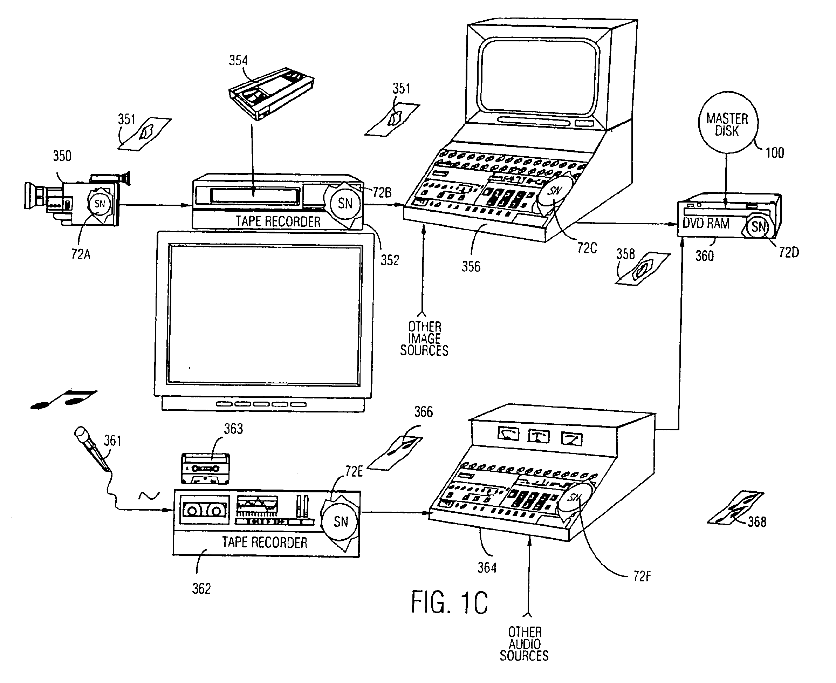

Figure 1C shows an example secure process for creating a master multimedia DVD disk 100 for use with players 50, 60. In this example, a digital camera 350 converts light images (i.e., pictures) into digital information 351 representing one or a sequence of images. Digital camera 350 in this example includes a secure node 72A that protects the digital information 351 before it leaves camera 350. Such protection can be accomplished, for example, by packaging the digital information within one or more containers and/or associating controls with the digital information.

In this example, digital camera 350 provides the protected digital image information 351 to a storage device such as, for example, a digital tape recorder 352. Tape recorder 352 stores the digital image information 351 (along with any associated controls) onto a storage medium such as magnetic tape cartridge 354 for example. Tape recorder 352 may also include a secure node 72B. Secure node 72B in this example can understand and enforce the controls that the digital camera secure node 72A applies to and/or associated with the digital information 351, and/or it may apply its own controls to the stored information.

The same or different tape recorder 352 may play back protected digital information 351 to a digital mixing board 356. Digital mixing board 356 may mix, edit, enhance or otherwise process the digital information 351 to generate processed digital information 358 representing one or a sequence of images. Digital mixing board 356 may receive additional inputs from other devices such as for example other tape recorders, other digital cameras, character generators, graphics generators, animators, or any other image-based devices. Any or all of such devices may also include secure nodes 72 to protect the information they generate. In some embodiments, some of the digital information can be derived from equipment including a secure node, and other digital information can be derived from equipment that has no secure node. In still other embodiments, some of the digital information provided to digital mixer 356 is protected and some is not protected.

Digital mixing board 356 may also include a secure node 72C in this example. The digital mixing board secure node 72C may enforce controls applied by digital camera secure node 72A and/or tape recorder secure node 72B, and/or it may add its own protections to the digital information 358 it generates.

In this example, an audio microphone 361 receives sound and converts the sound into analog audio signals. The audio signals in this example are inputted to a digital audio tape recorder 362. In the example shown, tape recorder 362 and audio mixer 364 are digital devices. However, in other embodiments, one, the other or both of these devices may operate in the analog domain. In the example shown, digital audio tape recorder 362 converts the analog audio signals into digital information representing the sounds, and stores the digital information (and any associated controls) onto a tape 362.

In this example, audio tape recorder 362 includes a secure node 72E that may associate controls with the information stored on tape 363. Such controls may be stored with the information on the tape 363. In another embodiment, microphone 361 may include its own internal secure node 72 that associates control information with the audio information (e.g., by steganographically encoding the audio information with control information). The tape recorder 362 may enforce such controls applied by microphone 361.

Alternatively, microphone 361 may operate in the digital domain and provide digital representations of audio, perhaps including control information supplied by secure node 72 optionally incorporated in microphone 361, directly to connected devices such as audio tape recorder 362. Digital representations may optionally be substituted for analog representations of any signals between the devices in the example Figure 1C.

The same or different tape recorder 362 may play back the information recorded on tape 363, and provide the information 366 to an audio mixer 364. Audio mixer 364 may edit, mix, or otherwise process the information 366 to produce information 368 representing one or a sequence of sounds. Audio mixer 364 may also receive inputs from other devices such as for example other tape recorders, other microphones, sound generators, musical synthesizers, or any other audio-based devices. Any or all of such devices may also include secure nodes 72 to protect the information they generate. In some embodiments, some of the digital information is derived from equipment including a secure node, and other digital information is derived from equipment that has no secure node. In still other embodiments, some of the digital information provided to audio mixer 364 is protected and some is not protected.

Audio mixer 364 in this example includes a secure node 72F that enforces the controls, if any, applied by audio tape recorder secure node 72E; and/or applies its own controls.

Digital image mixer 356 may provide digital information 358 to "DVD-RAM" equipment 360 that is capable of writing to master disks 100 and/or to disks from which master dicks may be created Similarly, audio mixer 364 may provide digital information 368 to equipment 360. Equipment 360 records the image information 358 and audio information 368 onto master disk 100. In this example, equipment 360 may include a secure node 72D that enforces controls applied by digital camera secure node 72A, tape recorder secure node 72B, digital mixer secure node 72C audio tape recorder secure node 72E and/or audio mixer secure node 72F; and/or it may add its own protections to the digital information 358 it writes onto master disks 100. A disk manufacturer can then mass-produce disks 100(1)-100(N) based on the master disk 100 using conventional disk mass-production equipment for distribution through any channels (e.g., video and music stores, websites, movie theaters, etc.). Consumer appliances 50 shown in Figures 1A and 1B may play back the disks 100 - enforcing the controls applied to the information stored on the disks 100. Secure nodes 72 thus maintain end-to-end, persistent secure control over the images generated by digital camera 350 and the sounds generated by microphone 361 during the entire process of making, distributing and using disks 100.

In the Figure 1C example shown, the various devices may communicate with one another over so-called "IEEE 1394" high-speed digital serial busses. In this context, "IEEE 1394" refers to hardware and software standards set forth in the following standards specification incorporated by reference herein: 1394-1995 IEEE Standard for a High Performance Serial Bus, No. 1-55937-583-3 (Institute of Electrical and Electronics Engineers 1995). This specification describes a high-speed memory mapped digital serial bus that is self-configuring, hot pluggable, low cost and scalable. The bus supports isochronous and asynchronous transport at 100, 200 or 400 Mbps, and flexibly supports a number of different topologies. The specification describes a physical level including two power conductors and two twisted pairs for signalling. The specification further describes physical, link and transaction layer protocols including serial bus management. Alternatively, any other suitable electronic communication means may be substituted for the "IEEE 1394" medium shown in Figure 1C, including other wired media (e.g., Ethernet, universal serial bus), and/or wireless media based on radio-frequency (RF) transmission, infra-red signals, and/or any other means and/or types of electronic communication.

### Example Dedicated Player Architecture

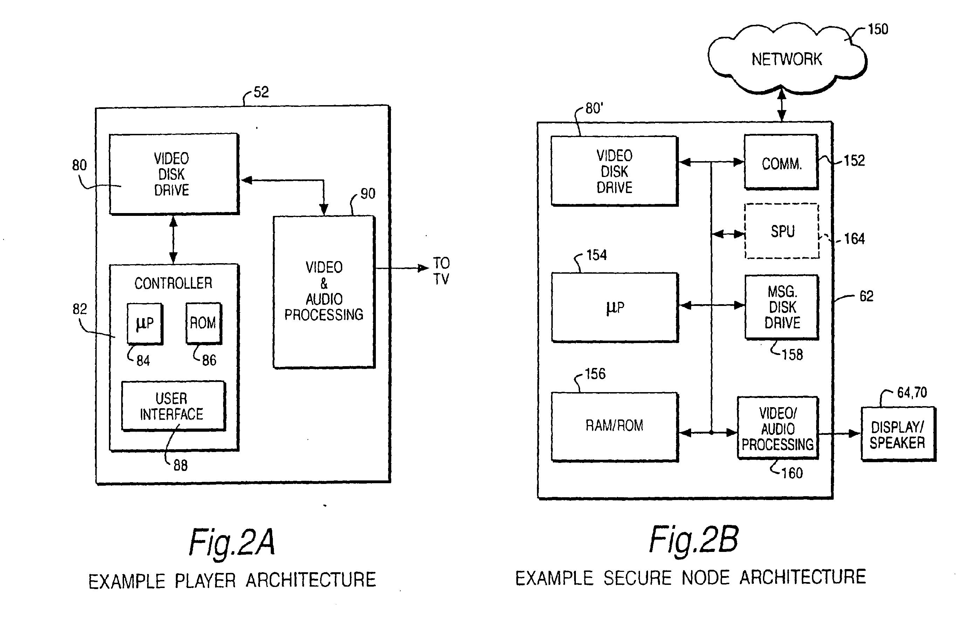

Figure 2A shows an example architecture for dedicated player 52. In this example, player 52 includes a video disk drive 80, a controller 82 (e.g., including a microprocessor 84, a memory device such as a read only memory 86, and a user interface 88), and a video/audio processing block 90. Video disk drive 80 optically and physically cooperates with disk 100, and reads digital information from the disk. Controller 82 controls disk drive 80 based on program instructions executed by microprocessor 84 and stored in memory 86 (and further based on user inputs provided by user interface 88 which may be coupled to controls 58 and/or remote control unit 56). Video/audio processing block 90 converts digital video and audio information read by disk drive 80 into signals compatible with home color television set 54 using standard techniques such as video and audio decompression and the like. Video/audio processing block 90 may also insert a visual marking indicating the ownership and/or protection of the video program. Block 90 may also introduce a digital marking indicating to a standard recording device that the content should not be recorded.

### Example Secure Node Architecture

Figure 2B shows an example architecture for platform 60 shown in Figure 1B-which in this example is built around a personal computer 62 but could comprise any number of different types of appliances. In this example, personal computer 62 may be connected to an electronic network 150 such as the Internet via a communications block 152. Computer equipment 62 may include a video disk drive 80' (which may be similar or identical to the disk drive 80 included within example player 52). Computer equipment 62 may further include a microprocessor 154, a memory 156 (including for example random access memory and read only memory), a magnetic disk drive 158, and a video/audio processing block 160. Additionally, computer equipment 62 may include a tamper-resistant secure processing unit 164 or other protected processing environment. Secure node 72 shown in Figure 1B may thus be provided by a secure processing unit 164, software executing on microprocessor 154, or a combination of the two. Different embodiments may provide secure node 72 using software-only, hardware-only, or hybrid arrangements.

Secure node 72 in this example may provide and support a a general purpose Rights Operating System employing reusable kernel and rights language components. Such a commerce-enabling Rights Operating System provides capabilities and integration for advanced commerce operating systems of the future. In the evolving electronic domain, general purpose, reusable electronic commerce capabilities that all participants can rely on will become as important as any other capability of operating systems. Moreover, a rights operating system that provides, among other things, rights and auditing operating system functions can securely handle a broad range of tasks that relate to a virtual distribution environment. A secure processing unit can, for example, provide or support many of the security functions of the rights and auditing operating system functions. The other operating system functions can, for example, handle general appliance functions. The overall operating system may, for example, be designed from the beginning to include the rights and auditing operating system functions plus the other operating system functions, or the rights and auditing operating system functions may, in another example, be an add-on to a preexisting operating system providing the other operating system functions. Any or all of these features may be used in combination with the invention disclosed herein.

### Example Disk Data Structures and Associated Protections

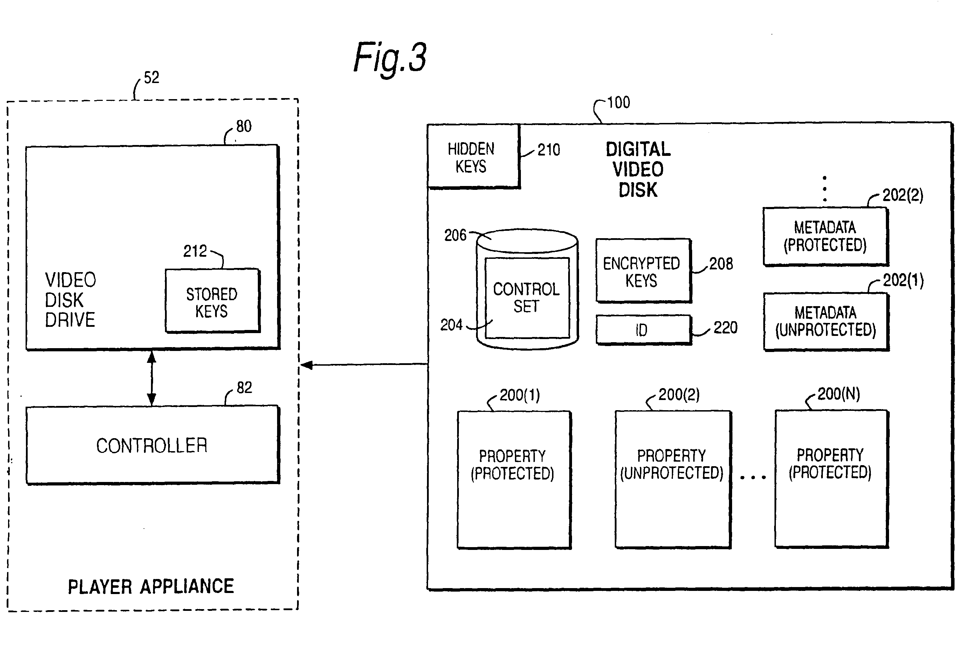

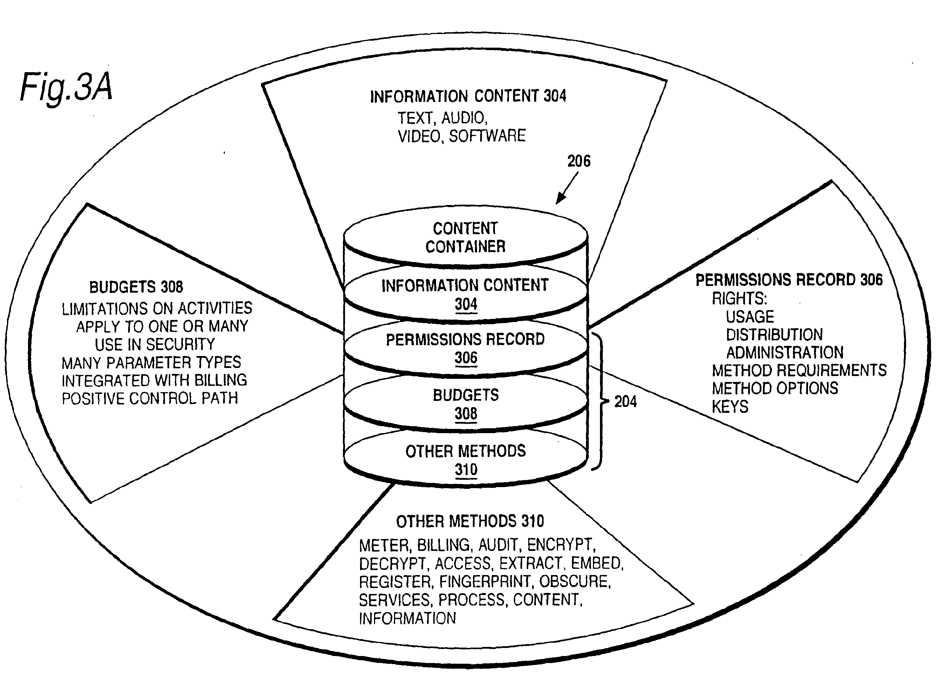

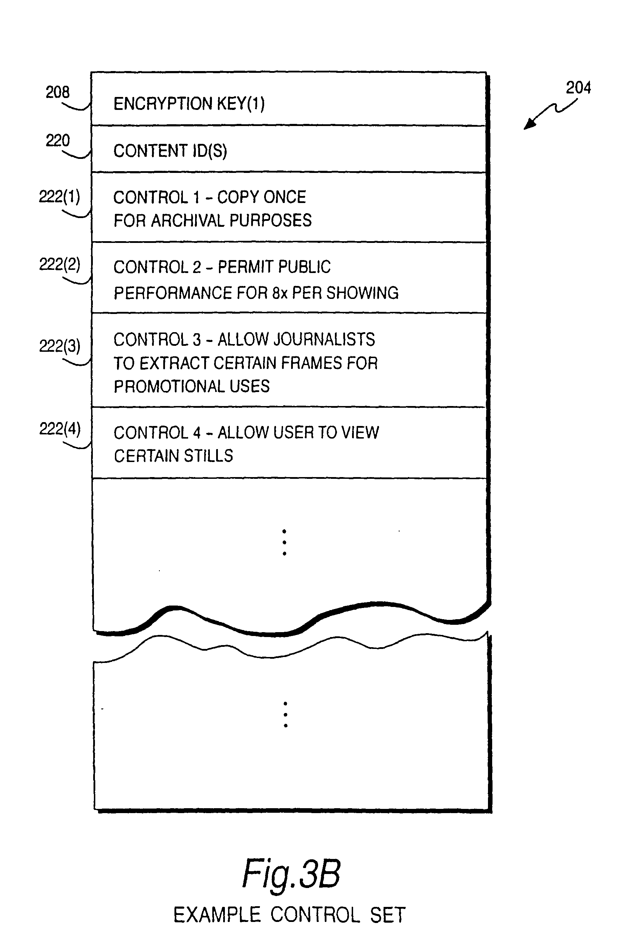

Figure 3 shows some example data structures stored on disk 100. In this example, disk 100 may store one or more properties or other content 200 in protected or unprotected form. Generally, in this example, a property 200 is protected if it is at least in part encrypted and/or associated information needed to use the property is at least in part encrypted and/or otherwise unusable without certain conditions having being met. For example, property 200(1) may be completely or partially encrypted using conventional secure cryptographic techniques. Another property 200(2) may be completely unprotected so that it can be used freely without any restriction. Thus, in accordance with this example, disk 100 could store both a movie as a protected property 200(1) and an unprotected interview with the actors and producers or a "trailer" as unprotected property 200(2). As shown in this example, disk 100 may store any number of different properties 200 in protected or unprotected form as limited only by the storage capacity of the disk.

In one example, the protection mechanisms provided by disk 100 may use any or all of the protection (and/or other) structures and/or techniques described in the above-referenced Shear patents. The Shear patents describe, by way of non-exhaustive example, means for solving the problem of how to protect digital content from unauthorized use. For example, the Shear patent specifications describe, among other things, means for electronically "overseeing" -- through distributed control nodes present in client computers -- the use of digital content. This includes means and methods for fulfilling the consequences of any such use.

Non-limiting examples of certain elements described in the Shear patent specifications include:
(a) decryption of encrypted information,
(b) metering,
(c) usage control in response to a combination of derived metering information and rules set by content providers,
(d) securely reporting content usage information,
(e) use of database technology for protected information storage and delivery,
(f) local secure maintenance of budgets, including, for example, credit budgets,
(g) local, secure storage of encryption key and content usage information,
(h) local secure execution of control processes, and
(i) in many non-limiting instances, the use of optical media.

Any or all of these features may be used in combination in or with the inventions disclosed herein.

Certain of the issued Shear patents' specifications also involve database content being local and remote to users. Database information that is stored locally at the end-user's system and complemented by remote, "on-line" database information, can, for example, be used to augment the local information, which in one example, may be stored on optical media (for example, DVD and/or CD-ROM). Special purpose semiconductor hardware can, for example, be used to provide a secure execution environment to ensure a safe and reliable setting for digital commerce activities.

The Shear patents also describe, among other things, database usage control enabled through the use of security, metering, and usage administration capabilities. The specifications describe, *inter alia,* a metering and control system in which a database, at least partially encrypted, is delivered to a user (e.g., on optical media). Non-limiting examples of such optical media may, for example, include DVD and CD-ROM. Subsequent usage can, for example, be metered and controlled in any of a variety of ways, and resulting usage information can be transmitted to a responsible party (as one example).

The Shear patent specifications also describe the generation of a bill in response to the transmitted information. Other embodiments of the Shear patents provide, for example, unique information security inventions which involve, for example, digital content usage being limited based on patterns of usage such as the quantity of particular kinds of usage. These capabilities include monitoring the "contiguousness," and/or "logical relatedness" of used information to ensure that the electronic "conduct" of an individual does not exceed his or her licensed rights. Still other aspects of the Shear patents describe, among other things, capabilities for enabling organizations to securely and locally manage electronic information usage rights. When a database or a portion of a database is delivered to a client site, some embodiments of the Shear patents provide, for example, optical storage means (non-exhaustive examples of which include DVD and CD-ROM) as the mechanism of delivery. Such storage means can store, for example, a collection of video, audio, images, software programs, games, etc., in one example, on optical media, such as DVD and/or CD-ROM, in addition to other content such as a collection of textual documents, bibliographic records, parts catalogs, and copyrighted or uncopyrighted materials of all kinds. Any or all of these features may be used in the embodiments herein.

One specific non-limiting embodiment could, for example, involve a provider who prepares a collection of games. The provider prepares a database "index" that stores information pertaining to the games, such as for example, the name, a description, a creator identifier, the billing rates, and the maximum number of times or total elapsed time each game may be used prior to a registration or re-registration requirement. Some or all of this information could be stored in encrypted form, in one example, on optical media, non-limiting examples of which include DVD and CD-ROM. The provider may then encrypt some or all portions of the games such that a game could not be used unless one or more encrypted portions were decrypted. Typically, decryption would not occur unless provider specified conditions were satisfied, in one example, unless credit was available to compensate for use and audit information reflecting game usage was being stored. The provider could determine, for example: which user activities he or she would allow, whether to meter such activities for audit and/or control purposes, and what, if any, limits would be set for allowed activities. This might include, for example, the number of times that a game is played, and the duration of each play. Billing rates might be discounted, for example, based on total time of game usage, total number of games currently registered for use, or whether the customer was also registered for other services available from the same provider, etc.

In the non-limiting example discussed above, a provider might, for example, assemble all of the prepared games along with other, related information, and publish the collection on optical media, non-limiting examples of which include CD-ROM and/or DVD. The provider might then distribute this DVD disk to prospective customers. The customers could then select the games they wish to play, and contact the provider. The provider, based on its business model, could then send enabling information to each authorized customer, such as for example, including, or enabling for use, decryption keys for the encrypted portion of the selected games (alternatively, authorization to use the games may have arrived with the DVD and/or CD-ROM disk, or might be automatically determined, based on provider set criteria, by the user's secure client system, for example, based on a user's participation in a certified user class). Using the user's client decryption and metering mechanism the customer could then make use of the games. The mechanism might then record usage information, such as for example, the number of times the game was used, and, for example, the duration of each play. It could periodically transmit this information the game provider, thus substantially reducing the administration overhead requirements of the provider's central servers. The game provider could receive compensation for use of the games based upon the received audit information. This information could be used to either bill their customers or, alternatively, receive compensation from a provider of credit.

Although games provide one convenient, non-limiting example, many of these same ideas can be easily applied to all kinds of content, all kinds of properties, including, by way of non-limiting examples:
● video,
● digitized movies,
● audio,
● images,
● multimedia,
● software,
● games,
● any other kind of property
● any combination of properties.

Other non-limiting embodiments of the Shear patent specifications support, for example, securely controlling different kinds of user activities, such as displaying, printing, saving electronically, communicating, etc. Certain aspects further apply different control criteria to these different usage activities. For example, information that is being browsed may be distinguished from information that is read into a host computer for the purpose of copying, modifying, or telecommunicating, with different cost rates being applied to the different activities (so that, for example, the cost of browsing can be much less than the cost of copying or printing).

The Shear patent specifications also, for example, describe management of information inside of organizations by both publishers and the customer. For example, an optional security system can be used to allow an organization to prevent usage of all or a portion of an information base unless the user enters his security code. Multiple levels of security codes can be supported to allow restriction of an individual's use according to his security authorization level. One embodiment can, for example, use hardware in combination with software to improve tamper resistance, and another embodiment could employ an entirely software based system. Although a dedicated hardware/software system may under certain circumstances provide assurance against tampering, techniques which may be implemented in software executing on a non-dedicated system may provide sufficient tamper resistance for some applications. Any or all of these features may be used in combination with the technology disclosed in this patent specification.

### Figures 3 Disks May Also Store Metadata, Controls and Other Information

In this example, disk 100 may also store "metadata" in protected and/or unprotected form. Player 52 uses metadata 202 to assist in using one or more of the properties 200 stored by disk 100. For example, disk 100 may store one metadata block 202(1) in unprotected form and another metadata block 202(2) in protected form. Any number of metadata blocks 202 in protected and/or unprotected form may be stored by disk 100 as limited only by the disk's storage capacity. In this example, metadata 202 comprises information used to access properties 200. Such metadata 202 may comprise, for example, frame sequence or other "navigational" information that controls the playback sequence of one or more of the properties 200 stored on disk 100. As one example, an unprotected metadata block 202 may access only selected portions of a protected property 200 to generate an abbreviated "trailer" presentation, while protected metadata block 202 may contain the frame playback sequence for the entire video presentation of the property 200. As another example, different metadata blocks 202 may be provided for different "cuts" of the same motion picture property 200 (e.g., an R-rated version, a PG-rated version, a director's cut version, etc.).

In this example, disk 100 may store additional information for security purposes. For example, disk 100 may store control rules in the form of a control set 204-which may be packaged in the form of one or more secure containers 206. Commerce model participants can securely contribute electronic rules and controls that represent their respective "electronic" interests. These rules and controls extend a "Virtual Presence^{™}" through which the commerce participants may govern remote value chain activities according to their respective, mutually agreed to rights. This Virtual Presence may take the form of participant specified electronic conditions (e.g., rules and controls) that must be satisfied before an electronic event may occur. These rules and controls can be used to enforce the party's rights during "downstream" electronic commerce activities. Control information delivered by, and/or otherwise available for use with, VDE content containers may, for example, constitute one or more "proposed" electronic agreements which manage the use and/or consequences of the use of such content and which can enact the terms and conditions of agreements involving multiple parties and their various rights and obligations.

The rules and controls from multiple parties can be used, in one example, to form aggregate control sets ("Cooperative Virtual Presence^{™}") that ensure that electronic commerce activities will be consistent with the agreements amongst value chain participants. These control sets may, for example, define the conditions which govern interaction with protected digital content (disseminated digital content, appliance control information, etc.). These conditions can, for example, be used to control not only digital information use itself, but also the consequences of such use. Consequently, the individual interests of commerce participants are protected and cooperative, efficient, and flexible electronic commerce business models can be formed. These models can be used in combination with the present invention.

### Disks May Store Encrypted Information

Disk 100 may also store an encrypted key block 208. In this example, disk 100 may further store one or more hidden keys 210. In this example, encrypted key block 208 provides one or more cryptographic keys for use in decrypting one or more properties 200 and/or one or more metadata blocks 202. Key block 208 may provide different cryptographic keys for decrypting different properties 200 and/or metadata blocks 202, or different portions of the same property and/or metadata block. Thus, key block 208 may comprise a large number of cryptographic keys, all of which are or may be required if all of the content stored by disk 100 is to be used. Although key block 208 is shown in Figure 3 as being separate from container 206, it may be included within or as part of the container if desired.

Cryptographic key block 208 is itself encrypted using one or more additional cryptographic keys. In order for player 52 to use any of the protected information stored on disk 100, it must first decrypt corresponding keys within the encrypted key block 208-and then use the decrypted keys from the key block to decrypt the corresponding content.

In this example, the keys required to decrypt encrypted key block 208 may come from several different (possibly alternative) sources. In the example shown in Figure 3, disk 100 stores one or more decryption keys for decrypting key block 208 on the medium itself in the form of a hidden key(s) 210. Hidden key(s) 210 may be stored, for example, in a location on disk 100 not normally accessible. This "not normally accessible" location could, for example, be physically enabled for drives 80 installed in players 52 and disabled for drives 80' installed in personal computers 62. Enablement could be provided by different firmware, a jumper on drive 80, etc. Hidden key(s) 210 could be arranged on disk 100 so that any attempt to physically copy the disk would result in a failure to copy the hidden key(s). In one example a hidden key(s) could be hidden in the bit stream coding sequences for one or more blocks as described by J. Hogan (Josh Hogan, "DVD Copy Protection," presentation to DVD copy protect technical meeting #4, 5/30/96, Burbank, CA.)

Alternatively, and/or in addition, keys required to decrypt encrypted key block 208 could be provided by disk drive 80. In this example, disk drive 80 might include a small decryption component such as, for example, an integrated circuit decryption engine including a small secure internal key store memory 212 having keys stored therein. Disk drive 80 could use this key store 212 in order to decrypt encrypted key block 208 without exposing either keys 212 or decrypted key block 208-and then use the decrypted key from key block 208 to decrypt protected content 200, 202.

### Disks May Store and/or Use Secure Containers

In yet another example, the key(s) required to decrypt protected content 200, 202 is provided within secure container 206. Figure 3A shows a possible example of a secure container 206 including information content 304 (properties 200 and metadata 202 may be external to the container-or alternatively, most or all of the data structures stored by video disk 100 may be included as part of a logical and/or actual protected container). The control set 204 shown in Figure 3 may comprise one or more permissions record 306, one or more budgets 308 and/or one or more methods 310 as shown in Figure 3A. Figure 3B shows an example control set 204 providing one or more encryption keys 208, one or more content identifiers 220, and one or more controls 222. In this example, different controls 222 may apply to different equipment and/or classes of equipment such as player 52 and/or computer equipment 62 depending upon the capabilities of the particular platform and/or class of platform. Additionally, controls 220 may apply to different ones of properties 200 and/or different ones of metadata blocks 202. For example, a control 222(1) may allow property 200(1) to be copied only once for archival purposes by either player 52 or computer equipment 62. A control 222(2) (which may be completely ignored by player 52 because it has insufficient technical and/or security capabilities but which may be useable by computer equipment 62 with its secure node 72) may allow the user to request and permit a public performance of the same property 200(1) (e.g., for showing in a bar or other public place) and cause the user's credit or other account to be automatically debited by a certain amount of compensation for each showing. A third control 222(3) may, for example, allow secure node 72 (but not player 52) to permit certain classes of users (e.g., certified television advertisers and journalists) to extract or excerpt certain parts of protected property 200(1) for promotional uses. A further control 222(4) may, as another example, allow both video player 52 and secure node 72 to view certain still frames within property 200(1)-but might allow only secure node 72 to make copies of the still frames based on a certain compensation level.

### Example Disks and/or System May Make Use of Trusted Infrastructure

Controls 222 may contain pointers to sources of additional control sets for one or more properties, controls, metadata, and/or other content on the optical disk. In one example, these additional controls may be obtained from a trusted third party, such as a rights and permissions clearinghouse and/or from any other value chain participant authorized by at least one rightsholder to provide at least one additional control set. This kind of rights and permissions clearinghouse is one of several distributed electronic administrative and support services that may be referred to as the "Distributed Commerce Utility," which, among other things, is an integrated, modular array of administrative and support services for electronic commerce and electronic rights and transaction management. These administrative and support services can be used to supply a secure foundation for conducting financial management, rights management, certificate authority, rules clearing, usage clearing, secure directory services, and other transaction related capabilities functioning over a vast electronic network such as the Internet and/or over organization internal Intranets, or even in-home networks of electronic appliances. Non-limiting examples of these electronic appliances include at least occasionally connected optical media appliances, examples of which include read-only and/or writable DVD players and DVD drives in computers and convergent devices, including, for example, digital televisions and settop boxes incorporating DVD drives.

These administrative and support services can, for example, be adapted to the specific needs of electronic commerce value chains in any number of vertical markets, including a wide variety of entertainment applications. Electronic commerce participants can, for example, use these administrative and support services to support their interests, and/or they can shape and reuse these services in response to competitive business realities. Non-exhaustive examples of electronic commerce participants include individual creators, film and music studios, distributors, program aggregators, broadcasters, and cable and satellite operators.

The Distributed Commerce Utility can, for example, make optimally efficient use of commerce administration resources, and can, in at least some embodiments, scale in a practical fashion to optimally accommodate the demands of electronic commerce growth.

The Distributed Commerce Utility may, for example, comprise a number of Commerce Utility Systems. These Commerce Utility Systems can provide a web of infrastructure support available to, and reusable by, the entire electronic community and/or many or all of its participants. Different support functions can, for example, be collected together in hierarchical and/or in networked relationships to suit various business models and/or other objectives. Modular support functions can, for example, be combined in different arrays to form different Commerce Utility Systems for different design implementations and purposes. These Commerce Utility Systems can, for example, be distributed across a large number of electronic appliances with varying degrees of distribution.

The "Distributed Commerce Utility" provides numerous additional capabilities and benefits that can be used in conjunction with the particular embodiments shown in the drawings of this application, non-exhaustive examples of which include:
● Enables practical and efficient electronic commerce and rights management.
● Provides services that securely administer and support electronic interactions and consequences.
● Provides infrastructure for electronic commerce and other forms of human electronic interaction and relationships.
● Optimally applies the efficiencies of modem distributed computing and networking.
● Provides electronic automation and distributed processing.
● Supports electronic commerce and communications infrastructure that is modular, programmable, distributed and optimally computerized.
● Provides a comprehensive array of capabilities that can be combined to support services that perform various administrative and support roles.
● Maximizes benefits from electronic automation and distributed processing to produce optimal allocation and use of resources across a system or network.
● Is efficient, flexible, cost effective, configurable, reusable, modifiable, and generalizable.
● Can economically reflect users' business and privacy requirements.
● Can optimally distribute processes -- allowing commerce models to be flexible, scaled to demand and to match user requirements.
● Can efficiently handle a full range of activities and service volumes.
● Can be fashioned and operated for each business model, as a mixture of distributed and centralized processes.
● Provides a blend of local, centralized and networked capabilities that can be uniquely shaped and reshaped to meet changing conditions.
● Supports general purpose resources and is reusable for many different models; in place infrastructure can be reused by different value chains having different requirements.
● Can support any number of commerce and communications models.
● Efficiently applies local, centralized and networked resources to match each value chain's requirements.
● Sharing of common resources spreads out costs and maximizes efficiency.
● Supports mixed, distributed, peer-to-peer and centralized networked capabilities.
● Can operate locally, remotely and/or centrally.
● Can operate synchronously, asynchronously, or support both modes of operation.
● Adapts easily and flexibly to the rapidly changing sea of commercial opportunities, relationships and constraints of "Cyberspace."
Any or all of these features may be used in combination with the inventions disclosed herein.

The Distributed Commerce Utility provides, among other advantages, comprehensive, integrated administrative and support services for secure electronic commerce and other forms of electronic interaction. These electronic interactions supported by the Distributed Commerce Utility may, in at least some embodiments, entail the broadest range of appliances and distribution media, non-limiting examples of which include networks and other communications channels, consumer appliances, computers, convergent devices such as WebTV, and optical media such as CD-ROM and DVD in all their current and future forms.

### Example Access Techniques

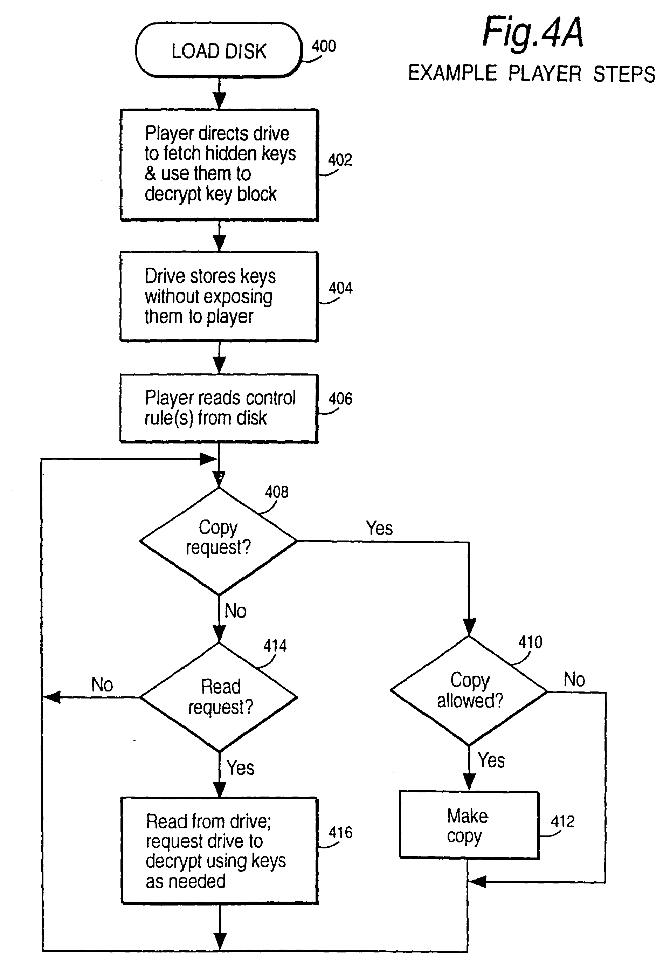

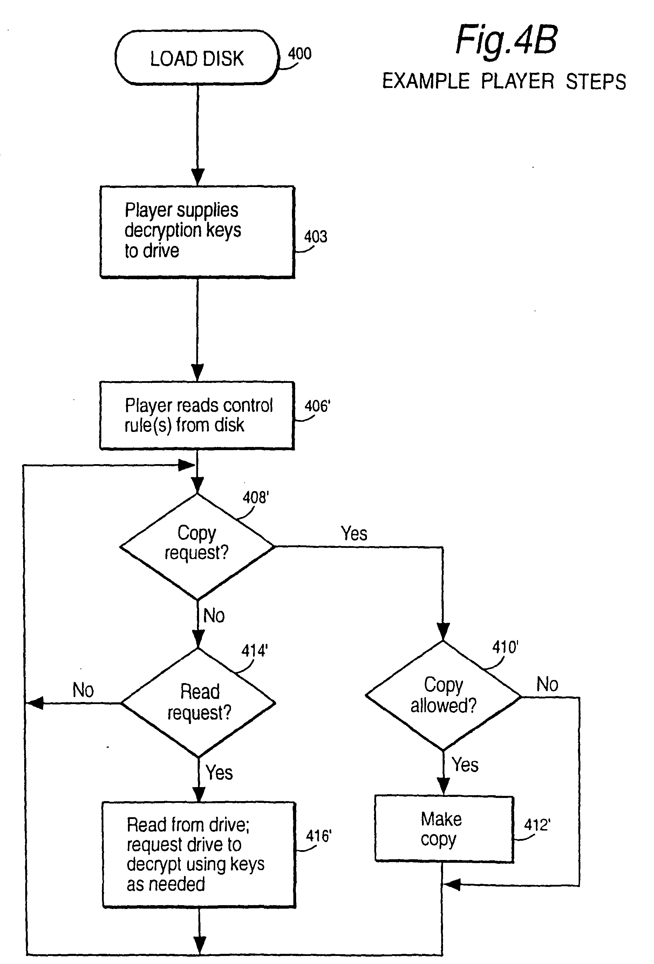

Figures 3, 4A and 4B show example access techniques provided by player 52. In this example, upon disk 100 being loaded into player disk drive 80 (Figure 4A, block 400), the player controller 82 may direct drive 80 to fetch hidden keys 210 from disk 100 and use them to decrypt some or all of the encrypted key block 208 (Figure 4A, block 402). In this example, drive 80 may store the keys so decrypted without exposing them to player controller 82 (e.g., by storing them within key store 212 within a secure decryption component such as an integrated circuit based decryption engine) (Figure 4A, block 404). The player 52 may control drive 80 to read the control set 204 (which may or may not be encrypted) from disk 100 (Figure 4A, block 406). The player microprocessor 82 may parse control set 204, ignore or discard those controls 222 that are beyond its capability, and maintain permissions and/or rights management information corresponding to the subset of controls that it can enforce (e.g., the "copy once" control 222(1)).

Player 52 may then wait for the user to provide a request via control inputs 58 and/or remote control unit 56. If the control input is a copy request ("yes" exit to Figure 4A, decision block 408), then player microprocessor 84 may query control 222(1) to determine whether copying is allowed, and if so, under what conditions (Figure 4A, decision block 410). Player 52 may refuse to copy the disk 100 if the corresponding control 222(1) forbids copying ("no" exit to Figure 4A, decision block 410), and may allow copying (e.g., by controlling drive 80 to sequentially access all of the information on disk 100 and provide it to an output port not shown) if corresponding control 222(1) permits copying ("yes" exit to Figure 4A, decision block 410; block 412). In this example, player 52 may, upon making a copy, store an identifier associated with disk 100 within an internal, non-volatile memory (e.g., controller memory 86) or elsewhere if control 222(1) so requires. This stored disk identifier can be used by player 52 to enforce a "copy once" restriction (i.e., if the user tries to use the same player to copy the same disk more than once or otherwise as forbidden by control 222(1), the player can deny the request).

If the user requests one of properties 200 to be played or read ("yes" exit to Figure 4A, decision block 414), player controller 82 may control drive 80 to read the corresponding information from the selected property 200 (e.g., in a sequence as specified by metadata 202) and decrypt the read information as needed using the keys initially obtained from key block 208 and now stored within drive key storage 212 (Figure 4A, block 416).

Figure 4B is a variation on the Figure 4A process to accommodate a situation in which player 52 itself provides decryption keys for decrypting encrypted key block 208. In this example, controller 82 may supply one or more decryption keys to drive 80 using a secure protocol such a Diffie-Hellman key agreement, or through use of a shared key known to both the drive and some other system or component to which the player 52 is or once was coupled (Figure 4B, block 403). The drive 80 may use these supplied keys to decrypt encrypted key block 208 as shown in Figure 4A, block 404, or it may use the supplied keys to directly decrypt content such as protected property 200 and/or protected metadata 202(2).

As a further example, the player 52 can be programmed to place a copy it makes of a digital property such as a film in encrypted form inside a tamper-resistant software container. The software container may carry with it a code indicating that the digital property is a copy rather than an original. The sending player 52 may also put its own unique identifier (or the unique identifier of an intended receiving device such as another player 52, a video cassette player or equipment 50) in the same secure container to enforce a requirement that the copy can be played only on the intended receiving device. Player 52 (or other receiving device) can be programmed to make no copies (or no additional copies) upon detecting that the digital property is a copy rather than an original. If desired, a player 52 can be programmed to refuse to play a digital property that is not packaged with the player's unique ID.

### Example Use of Analog Encoding Techniques

In another example, more comprehensive rights management information may be encoded by player 52 in the analog output using methods for watermarking and/or fingerprinting.Today, a substantial portion of the "real world" is analog rather than digital. Despite the pervasiveness of analog signals, existing methods for managing rights and protecting copyright in the analog realm are primitive or non-existent. For example:
● Quality degradation inherent in multigenerational analog copying has not prevented a multi-billion dollar pirating industry from flourishing.
● Some methods for video tape copy and pay per view protection attempt to prevent any copying at all of commercially released content, or allow only one generation of copying. These methods can generally be easily circumvented.
● Not all existing devices respond appropriately to copy protection signals.
● Existing schemes are limited for example to "copy/no copy" controls.
● Copy protection for sound recordings has not been commercially implemented.

A related problem relates to the conversion of information between the analog and digital domains. Even if information is effectively protected and controlled initially using strong digital rights management techniques, an analog copy of the same information may no longer be securely protected.

For example, it is generally possible for someone to make an analog recording of program material initially delivered in digital form. Some analog recordings based on digital originals are of quite good quality. For example, a Digital Versatile Disk ("DVD") player may convert a movie from digital to analog format and provide the analog signal to a high quality analog home VCR. The home VCR records the analog signal. A consumer now has a high quality analog copy of the original digital property. A person could re-record the analog signal on a DVD-RAM. This recording will in many circumstances have substantial quality - and would no longer be subject to "pay per view" or other digital rights management controls associated with the digital form of the same content.

Since analog formats will be with us for a long time to come, rightsholders such as film studios, video rental and distribution companies, music studios and distributors, and other value chain participants would very much like to have significantly better rights management capabilities for analog film, video, sound recordings and other content. Solving this problem generally requires a way to securely associate rights management information with the content being protected.

In combination with other rights management capabilities, watermarking and/or fingerprinting, may provide "end to end" secure rights management protection that allows content providers and rights holders to be sure their content will be adequately protected -- irrespective of the types of devices, signaling formats and nature of signal processing within the content distribution chain. This "end to end" protection also allows authorized analog appliances to be easily, seamlessly and cost-effectively integrated into a modem digital rights management architecture.

Watermarking and/or fingerprinting may carry, for example, control information that can be a basis for a Virtual Distribution Environment ("VDE") in which electronic rights management control information may be delivered over insecure (e.g., analog) communications channels. This Virtual Distribution Environment is highly flexible and convenient, accommodating existing and new business models while also providing an unprecedented degree of flexibility in facilitating ad hoc creation of new arrangements and relationships between electronic commerce and value chain participants -- regardless of whether content is distributed in digital and/or analog formats.

Watermarking together with distributed, peer-to-peer rights management technologies providers numerous advantages, including, but not limited to:
● An indelible and invisible, secure technique for providing rights management information.
● An indelible method of associating electronic commerce and/or rights management controls with analog content such as film, video, and sound recordings.
● Persistent association of the commerce and/or rights management controls with content from one end of a distribution system to the other -- regardless of the number and types of transformations between signaling formats (for example, analog to digital, and digital to analog).
● The ability to specify "no copy/ one copy/ many copies" rights management rules, and also more complex rights and transaction pricing models (such as, for example, "pay per view" and others).
● The ability to fully and seamlessly integrate with comprehensive, general electronic rights management solutions.
● Secure control information delivery in conjunction with authorized analog and other non-digital and/or non-secure information signal delivery mechanisms.
● The ability to provide more complex and/or more flexible commerce and/or rights management rules as content moves from the analog to the digital realm and back.
● The flexible ability to communicate commerce and/or rights management rules implementing new, updated, or additional business models to authorized analog and/or digital devices.
Any or all of these features may be used in combination in and/or with the inventions disclosed in the present specification.

Briefly, watermarking and/or fingerprinting methods may, using "steganographical" techniques, substantially indelibly and substantially invisibly encode rights management and/or electronic commerce rules and controls within an information signal such as, for example, an analog signal or a digitized (for example, sampled) version of an analog signal, non-limiting examples of which may include video and/or audio data, that is then decoded and utilized by the local appliance. The analog information and stenographically encoded rights management information may be transmitted via many means, non-limiting examples of which may include broadcast, cable TV, and/or physical media, VCR tapes, to mention one non-limiting example. Any or all of these techniques may be used in combination in accordance with the inventions disclosed herein.

Watermarking and/or fingerprinting methods enable at least some rights management information to survive transformation of the video and/or other information from analog to digital and from digital to analog format. Thus in one example, two or more analog and/or digital appliances may participate in an end-to-end fabric of trusted, secure rights management processes and/or events.

### Example, More Capable Embodiments

As discussed above, the example control set shown in Figure 3B provides a comprehensive, flexible and extensible set of controls for use by both player 52 and computer equipment 62 (or other platform) depending upon the particular technical, security and other capabilities of the platform. In this example, player 52 has only limited technical and security capabilities in order to keep cost and complexity down in a mass-produced consumer item, and therefore may essentially ignore or fail to enable some or all of the controls 222 provided within control set 204. In another example, the cost of memory and/or processors may continue to decline and manufacturers may choose to expand the technical and security capabilities of player 52. A more capable player 52 will provide more powerful, robust, and flexible rights management capabilities.

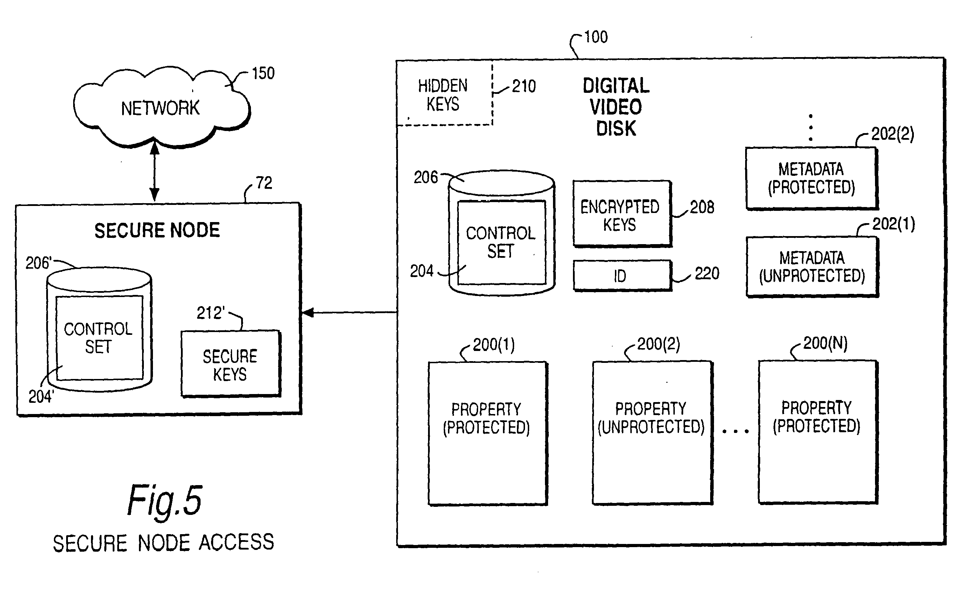

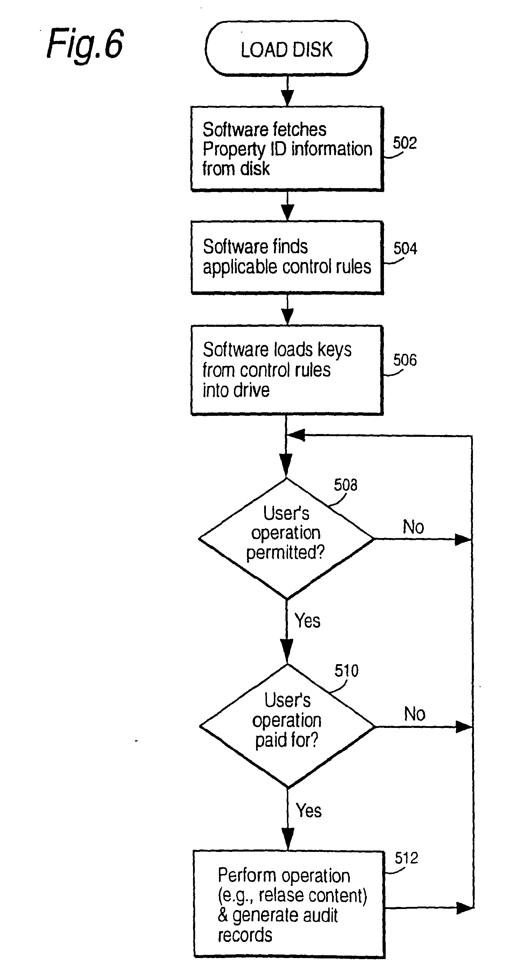

Figure 5 shows an example arrangement permitting platform 60 including secure node 72 to have enhanced and/or different capabilities to use information and/or rights management information on disk 100, and Figure 6 shows an example access technique provided by the secure node. Referring to Figure 5, secure node 72 may be coupled to a network 150 whereas player 52 may not be-giving the secure node great additional flexibility in terms of communicating security related information such as audit trails, compensation related information such as payment requests or orders, etc. This connection of secure node 72 to network 150 (which may be replaced in any given application by some other communications technique such as insertion of a replaceable memory cartridge) allows secure node 72 to receive and securely maintain rights management control information such as an additional container 206' containing an additional control set 204'. Secure node 72 may use control set 204' in addition or in lieu of a control set 204 stored on disk 100. Secure node 72 may also maintain a secure cryptographic key store 212 that may provide cryptographic keys to be used in lieu of or in addition to any keys 208, 210 that may be stored on disk 100. Because of its increased security and/or technical capabilities, secure node 72 may be able to use controls 222 within control set 204 that player 52 ignores or cannot use-and may be provided with further and/or enhanced rights and/or rights management capabilities based on control set 204' (which the user may, for example, order specially and which may apply to particular properties 200 stored on disk 100 and/or particular sets of disks).

### Example Secure Node Access Techniques

The Figure 6 example access technique (which may be performed by platform 60 employing secure node 72, for example) involves, in this particular example, the secure node 72 fetching property identification information 220 from disk 100 (Figure 6, block 502), and then locating applicable control sets and/or rules 204 (which may be stored on disk 100, within secure node 72, within one or more repositories the secure node 72 accesses via network 150, and/or a combination of any or all of these techniques) (Figure 6, block 504). Secure node 72 then loads the necessary decryption keys and uses them to decrypt information as required (Figure 6, block 506). In one example, secure node 72 obtains the necessary keys from secure containers 206 and/or 206' and maintains them within a protected processing environment such as SPU 164 or a software-emulated protected processing environment without exposing them externally of that environment. In another example, the secure node 72 may load the necessary keys (or a subset of them) into disk drive 82' using a secure key exchange protocol for use by the disk drive in decrypting information much in the same manner as would occur within player 52 in order to maintain complete compatibility in drive hardware.

Secure node 72 may monitor user inputs and perform requested actions based on the particular control set 204, 204'. For example, upon receiving a user request, secure node 72 may query the control set 204, 204' to determine whether it (they) permits the action the user has requested (Figure 6, block 508) and, if permitted, whether conditions for performing the requested operation have been satisfied (Figure 6, block 510). In this example, secure node 72 may effect the operations necessary to satisfy any such required conditions such as by, for example, debiting a user's locally-stored electronic cash wallet, securely requesting an account debit via network 150, obtaining and/or checking user certificates to ensure that the user is within an appropriate class or is who he or she says he is, etc.-using network 150 as required (Figure 6, block 510). Upon all necessary conditions being satisfied, secure node 72 may perform the requested operation (and/or enable microprocessor 154 to perform the operation) (e.g., to release content) and may then generate secure audit records which can be maintained by the secure node and/or reported at the time or later via network 150 (Figure 6, block 512).

If the requested operation is to release content (e.g., make a copy of the content), platform 60 (or player 52 in the example above) may perform the requested operation based at least in part on the particular controls that enforce rights over the content. For example, the controls may prevent platform 60 from releasing content except to certain types of output devices that cannot be used to copy the content, or they may release the content in a way that discourages copying (e.g., by "fingerprinting" the copy with an embedded designation of who created the copy, by intentionally degrading the released content so that any copies made from it will be inferior, etc.). As one specific example, a video cassette recorder (not shown) connected to platform 60 may be the output device used to make the copy. Because present generations of analog devices such as video cassette recorders are incapable of making multigenerational copies without significant loss in quality, the content provider may provide controls that permit content to be copied by such analog devices but not by digital devices (which can make an unlimited number of copies without quality loss). For example, platform 60 may, under control of digital controls maintained by secure node 72, release content to the video cassette recorder only after the video cassette recorder supplies the platform a digital ID that designates the output device as a video cassette recorder -- and may refuse to provide any output at all unless such a digital ID identifying the output device as a lower quality analog device is provided. Additionally or in the alternative, platform 60 may intentionally degrade the content it supplies to the video cassette recorder to ensure that no acceptable second -generation copies will be made. In another example, more comprehensive rights management information may be encoded by platform 60 in the analog output using watermarking and/or fingerprinting.

### Additional Examples of Secure Container Usage

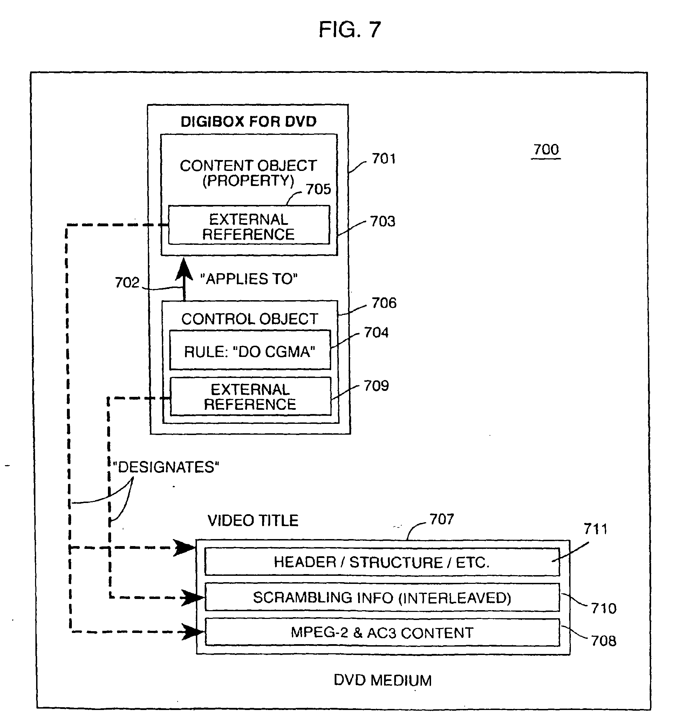

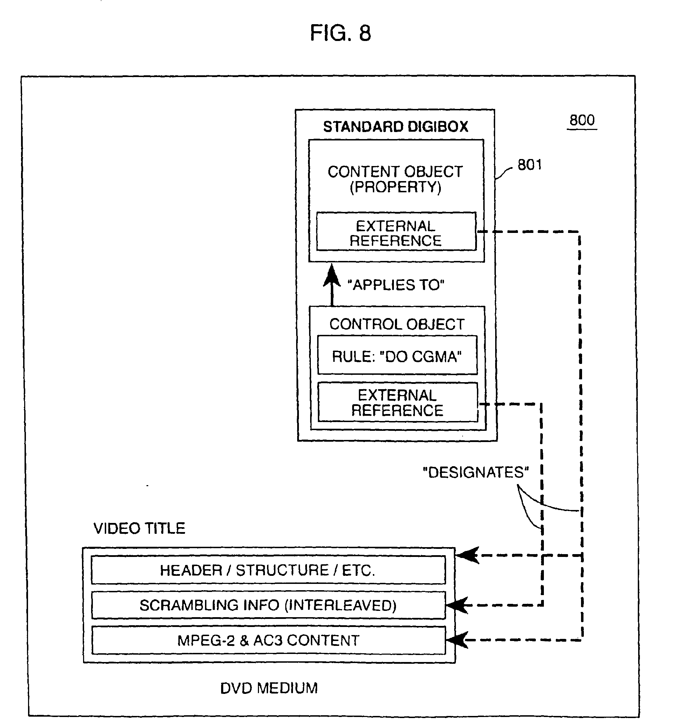

Figure 7 shows a basic example of a DVD medium 700 containing a kind of secure container 701 for use in DVDs in accordance with the present invention. As shown in this example, container 701 ("DigiBox for DVDs") could be a specialized version of a "standard" container tailored especially for use with DVD and/or other media, or it could, alternatively (in an arrangement shown later in Figure 8), be a fully "standard" container. As shown in this example, the specialized container 701 incorporates features that permit it to be used in conjunction with content information, metadata, and cryptographic and/or protection information that is stored on the DVD medium 700 in the same manner as would have been used had container 701 not been present. Thus, specialized container 701 provides compatibility with existing data formats and organizations used on DVDs and/or other media. In addition, a specialized container 701 can be tailored to support only those features necessary for use in support of DVD and/or other media, so that it can be processed and/or manipulated using less powerful or less expensive computing resources than would be required for complete support of a "standard" container object.

In this example, specialized "DVD only" container 701 includes a content object (a property) 703 which includes an "external reference" 705 to video title content 707, which may be stored on the DVD and/or other medium in the same manner as would have been used for a medium not including container 701. The video title content 707 may include MPEG-2 and/or AC-3 content 708, as well as scrambling (protection) information 710 and header, structure and/or meta data 711. External reference 705 contains information that "designates" (points to, identifies, and/or describes) specific external processes to be applied/executed in order to usecontent and other information not stored in container 701. In this example, external reference 705 designates video title content 707 and its components 708, 710, and 711. Alternatively, container 701 could store some or all of the video title content in the container itself, using a format and organization that is specific to container 701, rather than the standard format for the DVD and/or other medium 700.

In this example, container 701 also includes a control object (control set) 705 that specifies the rules that apply to use of video title content 707. As indicates by solid arrow 702, control object 705 "applies to" content object (property) 703. As shown in this example, rule 704 can specify that protection processes, for example CGMA or the Matsushita data scrambling process, be applied, and can designate, by external reference 709 contained in rule 704, data scrambling information 710 to be used in carrying out the protection scheme. The shorthand "do CGMA" description in rule 704 indicates that the rule requires that the standard CGMA protection scheme used for content on DVD media is to be used in conjunction with video title content 707, but a different example could specify arbitrary other rules in control object 705 in addition to or instead of the "do CGMA" rule, including other standard DVD protection mechanisms such as the Matsushita data scrambling scheme and/or other rights management mechanisms. External reference 709 permits rule 704 to be based on protection information 710 that is stored and manipulated in the same format and manner as for a DVD medium that does not incorporate container 701 and/or protection information that is meaningful only in the context of processing container 701.

Figure 8 shows a example of a DVD medium 800 containing a "standard" secure container 801. In this example, the "standard" container provides all of the functionality (if desired) of the Figure 7 container, but may offer additional and/or more extensive rights management and/or content use capabilities than available on the "DVD only" container (e.g., the capacity to operate with various different platforms that use secure nodes).

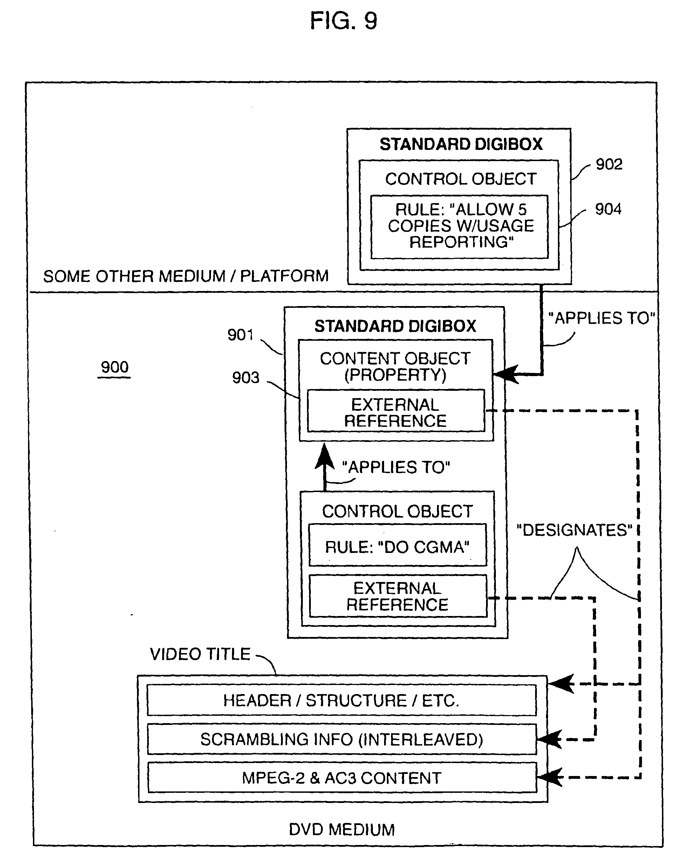

Figure 9 shows a more complex example of DVD medium 800 having a standard container 901 that provides all of the functionality (if desired) of the Figure 7 container, and that can function in concert with other standard containers 902 located either on the same DVD medium or imported from another remote secure node or network. In this example, standard container 902 may include a supplementary control object 904 which applies to content object 903 of standard container 901. Also in this example, container 902 may provide an additional rule(s) such as, for example, a rule permitting/extending rights to allow up to a certain number (e.g., five) copies of the content available on DVD 900. This arrangement, for example, provides added flexibility in controlling rights management of DVD content between multiple platforms via access through "backchannels" such as via a set-top box or other hardware having bi-directional communications capabilities with other networks or computers.

### Additional Use of A DVD Disk With A Secure Container

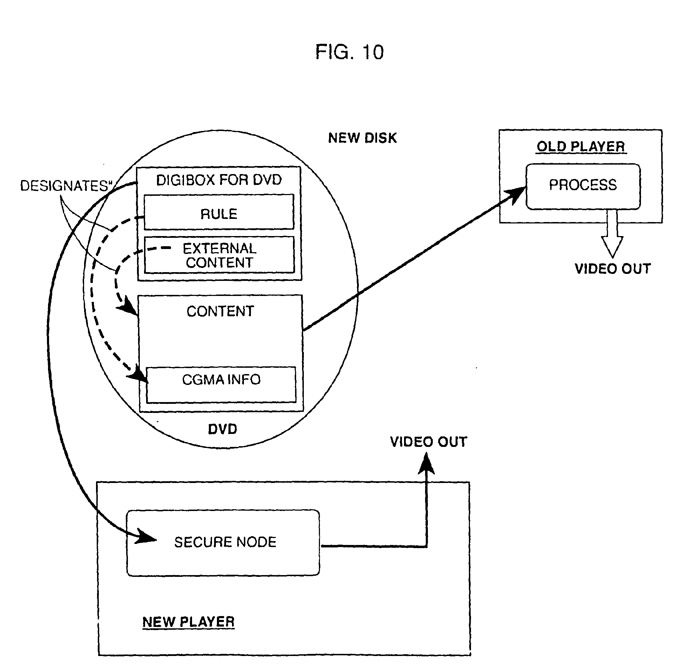

Figure 10 illustrates the use of a "new" DVD disk-i.e., one that includes a special DVD secure container in the medium. This container may, in one example, be used or two possible use scenarios: a first situation in which the disk is used on an "old" player (DVD appliance, i.e., a DVD appliance that is not equipped with a secure node to provide rights management in accordance with the present invention; and a second situation in which the disk is used on a "new" player-i.e., a DVD appliance which is equipped with a secure node to provide rights management in accordance with the present invention. In this example, a secure node within the "new" player is configured with the necessary capabilities to process other copy protection information such as, for example, CGMA control codes and data scrambling formats developed and proposed principally by Matsushita.

For example, in the situation shown in Figure 10, the "new" player (which incorporates a secure node in accordance with the present invention) can recognize the presence of a secure container on the disk. The player may then load the special DVD secure container from the disk into the resident secure node. The secure node opens the container, and implements and/or enforces appropriate rules and usage consequences associated with the content by applying rules from the control object. These rules are extremely flexible. In one example, the rules may, for example, call for use of other protection mechanisms (such as, for example, CGMA protection codes and Matsushita data scrambling) which can be found in the content (or property) portion of the container.

In another example shown in Figure 10, the special DVD container on the disk still allows the "old" player to use to a predetermined limited amount content material which may be used in accordance with conventional practices.

### Example Use of A DVD Disk With No Secure Container

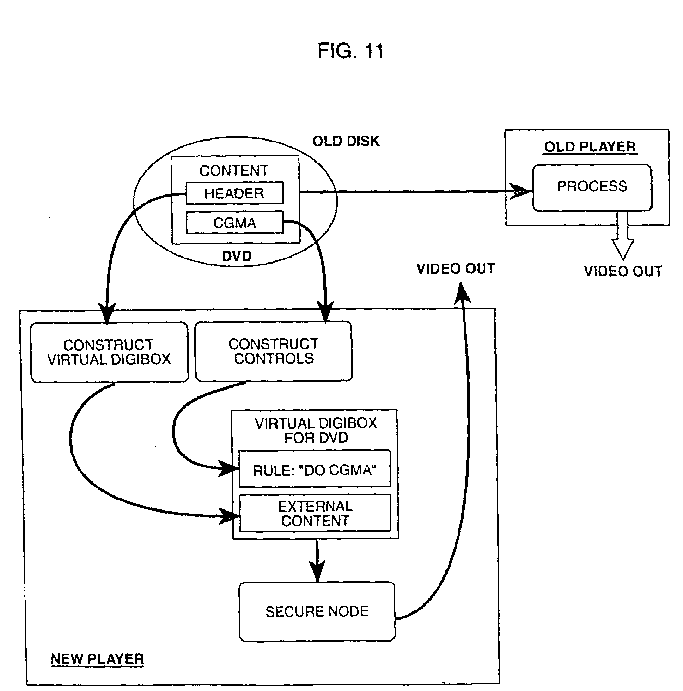

Referring now to Figure 11, a further scenario is discussed. Figure 11 illustrates use of an "old" DVD disk with two possible use examples: a first example in which the disk is used on an "old" player-i.e., a DVD appliance that is not equipped with a secure node for providing rights management in accordance with the present invention-and a second example in which the disk is used on a "new" player (i.e., equipped with a secure node).

In the first case, the "old" player will play the DVD content in a conventional manner. In the second scenario, the "new" player will recognize that the disk does not have a container stored in the medium. It therefore constructs a "virtual" container in resident memory of the appliance. To do this, it constructs a container content object, and also constructs a control object containing the appropriate rules. In one particular example, the only applicable rule it need apply is to "do CGMA" -- but in other examples, additional and/or different rules could be employed. The virtual container is then provided to the secure node within the "new" player for implementing management of use rights in accordance with the present invention. Although not shown in Figures 10 and 11, use of "external references" may also be provided in both virtual and non-virtual containers used in the DVD context.

### Example Illustrative Arrangements for Sharing, Brokering and Combining Rights When Operating in At Least Occasionally Connected Scenarios

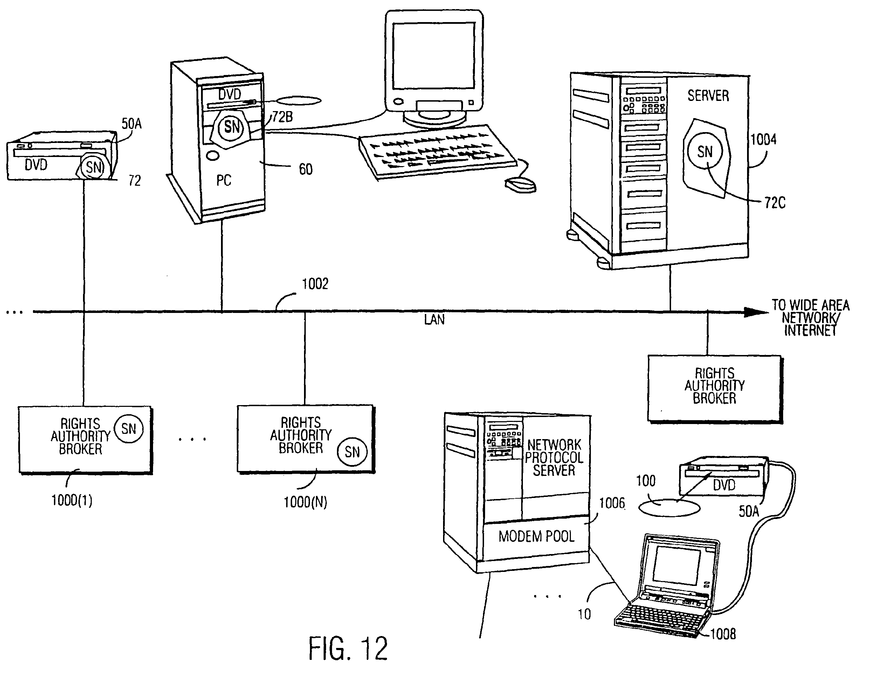

As described above, the rights management resources of several different devices and/or other systems can be flexibly combined in diverse logical and/or physical relationships, resulting for example in greater and/or differing rights. Such rights management resource combinations can be effected through connection to one or more remote rights authorities. Figures 12-14 show some non-limiting examples of how rights authorities can be used in various contexts.

For example, Figure 12 shows a rights authority broker 1000 connected to a local area network (LAN) 1002. LAN 1002 may connect to wide area network if desired. LAN 1002 provides connectivity between rights authority broker 1000 and any number of appliances such as for example a player 50, a personal computer 60, a CD "tower" type server 1004. In the example shown, LAN 1002 includes a modem pool (and/or network protocol server, not shown)1006 that allows a laptop computer 1008 to connect to the rights authority broker 1000 via dial-up lines 1010. Alternatively, laptop 1008 could communicate with rights authority broker 1000 using other network and/or communication means, such as the Internet and/or other Wide Area Networks (WANs). A disk player 50A may be coupled to laptop 1008 at the laptop location. In accordance with the teachings above, any or all of devices shown in Figure 12 may include one or more secure nodes 72.

Rights authority broker 1000 may act as an arbiter and/or negotiator of rights. For example, laptop 1008 and associated player 50A may have only limited usage rights when operating in a stand-alone configuration. However, when laptop 1008 connects to rights authority broker 1000 via modem pool 1006 and LAN 1002 and/or by other communication means, the laptop may acquire different and/or expanded rights to use disks 100 (e.g., availability of different content portions, different pricing, different extraction and/or redistribution rights, etc.) Similarly, player 50, equipment 60 and equipment 1004 may be provided with an enhanced and/or different set of disk usage rights through communication with rights authority broker 1000 over LAN 1002. Communication to and from rights authority broker 1000 is preferably secured through use of containers of the type disclosed in the above-referenced Ginter et al. patent specification.

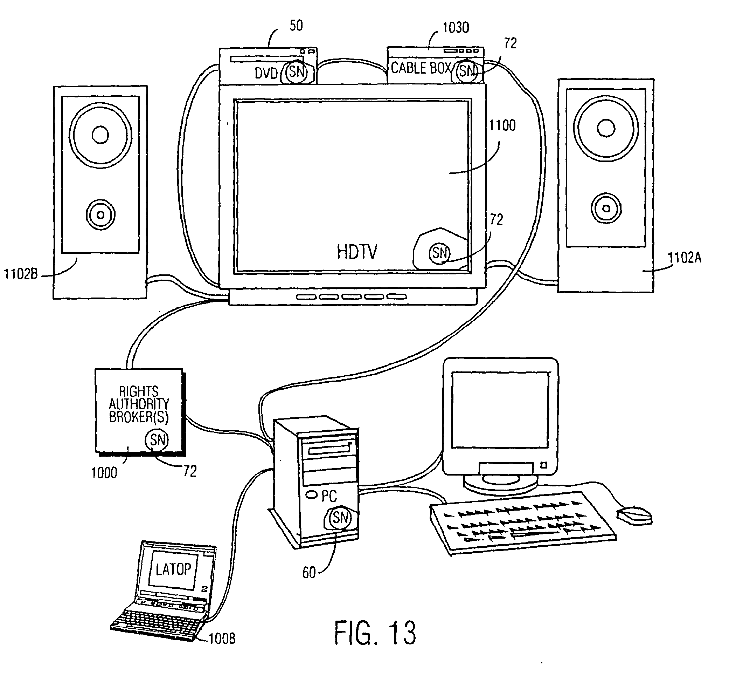

Figure 13 shows another example use of a rights authority broker 1000 within a home environment. In this example, the laptop computer 1008 may be connected to a home-based rights authority broker 1000 via a high speed serial IEEE 1394 bus and/or by other electronic communication means. In addition, rights authority broker 1000 can connect with any or all of:
● a high definition television 1100,
● one or more loudspeakers 1102 or other audio transducers,
● one or more personal computers 60,
● one or more set-top boxes 1030,
● one or more disk players 50,
● one or more other rights authority brokers 1000A-1000N and
● any other home or consumer equipment or appliances.
   Any or all of the equipment listed above may include a secure node 72.

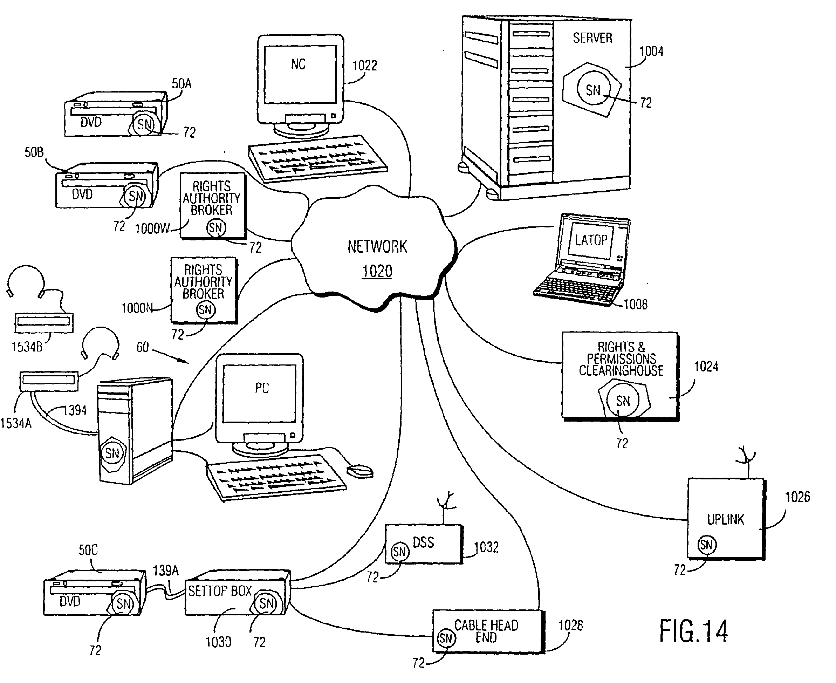

Figure 14 shows another example use of a rights authority broker 1000. In this example, rights authority broker 1000 is connected to a network 1020 such as a LAN, a WAN, the Internet, etc. Network 1020 may provide connectivity between rights authority broker 1000 and any or all of the following equipment:
● one or more connected or occasionally connected disk players 50A, 50B;
● one more networked computers 1022;
● one or more disk reader towers/servers 1004;
● one or more laptop computers 1008;
● one or more Commerce Utility Systems such as a rights and permissions clearinghouse 1024 (see Shear et al., "Trusted Infrastructure..." specification referenced above);
● one or more satellite or other communications uplinks 1026;
● one or more cable television head-ends 1028;
● one or more set-top boxes 1030 (which may be connected to satellite downlinks 1032 and/or disk players 50C);
● one or more personal computer equipment 60;
● one or more portable disk players 1034 (which may be connected through other equipment, directly, and/or occasionally unconnected;
● one or more other rights authority brokers 1000A-1000N; and
● any other desired equipment.
   Any or all of the above-mentioned equipment may include one or more secure nodes 72. Rights authority broker 1000 can distribute and/or combine rights for use by any or all of the other components shown in Figure 14. For example, rights authority broker 100 can supply further secure rights management resources to equipment connected to the broker via network 1020. Multiple equipment shown in Figure 14 can participate and work together in a permanently or temporarily connected network 1020 to share the rights management for a single node.
   Rights associated with parties and/or groups using and/or controlling such multiple devices and/or other systems can be employed according to underlying rights related rules and controls. As one example, rights available through a corporate executive's laptop computer 1008 might be combined with or substituted for, in some manner, the rights of one or more subordinate corporate employees when their computing or other devices 60 are coupled to network 1020 in a temporary networking relationship. In general, this aspect of the invention allows distributed rights management for DVD or otherwise packaged and delivered content that is protected by a distributed, peer-to-peer rights management. Such a distributed rights management can operate whether the DVD appliance or other content usage device is participating in a permanently or temporarily connected network 1020, and whether or not the relationships among the devices and/or other systems participating in the distributed rights management arrangement are relating temporarily or have a more permanent operating relationship.

For example, laptop computer 1008 may have different rights available depending on the context in which that device is operating. For example, in a general corporate environment such as shown in Figure 12, the laptop 1008 may have one set of rights. However, the same laptop 1008 may be given a different set of rights when connected to a more general network 1020 in collaboration with specified individuals and/or groups in a corporation. The same laptop 1008 may be given a still different set of rights when connected in a general home environment such as shown by example in Figure 13. The same laptop 1008 could be given still different rights when connected in still other environments such as, by way of non-limiting example:
● a home environment in collaboration with specified individuals and/or groups,
● a retail environment,
● a classroom setting as a student,
● a classroom setting in collaboration with an instructor, in a library environment,
● on a factory floor,
● on a factory floor in collaboration with equipment enabled to perform proprietary functions, and so on.

As one more particular example, coupling a limited resource device arrangement such as a DVD appliance 50 shown in Figure 14 with an inexpensive network computer (NC) 1022 may allow an augmenting (or replacing) of rights management capabilities and/or specific rights of parties and/or devices by permitting rights management to be a result of a combination of some or all of the rights and/or rights management capabilities of the DVD appliance and those of an Network or Personal Computer (NC or PC). Such rights may be further augmented, or otherwise modified or replaced by the availability of rights management capabilities provided by a trusted (secure) remote network rights authority 1000.

The same device, in this example a DVD appliance 50, can thus support different arrays, e.g., degrees, of rights management capabilities, in disconnected and connected arrangements and may further allow available rights to result from the availability of rights and/or rights management capabilities resulting from the combination of rights management devices and/or other systems. This may include one or more combinations of some or all of the rights available through the use of a "less" secure and/or resource poor device or system which are augmented, replaced, or otherwise modified through connection with a device or system that is "more" or "differently" secure and/or resource rich and/or possesses differing or different rights, wherein such connection employs rights and/or management capabilities of either and/or both devices as defined by rights related rules and controls that describe a shared rights management arrangement.

In the latter case, connectivity to a logically and/or physically remote rights management capability can expand (by, for example, increasing the available secure rights management resources) and/or change the character of the rights available to the user of the DVD appliance 50 or a DVD appliance when such device is coupled with an NC 1022, personal computer 60, and/or remote rights authority 1000. In this rights augmentation scenario, additional content portions may be available, pricing may change, redistribution rights may change (e.g., be expanded), content extraction rights may be increased, etc.

Such "networking rights management" can allow for a combination of rights management resources of plural devices and/or other systems in diverse logical and/or physical relationships, resulting in either greater or differing rights through the enhanced resources provided by connectivity with one or more "remote" rights authorities. Further, while providing for increased and/or differing rights management capability and/or rights, such a connectivity based rights management arrangement can support multi-locational content availability, by providing for seamless integration of remotely available content, for example, content stored in remote, Internet world wide web-based, database supported content repositories, with locally available content on one or more DVD discs 100.

In this instance, a user may experience not only increased or differing rights but may be able to use to both local DVD content and supplementing content (i.e., content that is more current from a time standpoint, more costly, more diverse, or complementary in some other fashion, etc.). In such an instance, a DVD appliance 50 and/or a user of a DVD appliance (or other device or system connected to such appliance) may have the same rights, differing, and/or different rights applied to locally and remotely available content, and portions of local and remotely available content may themselves be subject to differing or different rights when used by a user and/or appliance. This arrangement can support an overall, profound increase in user content opportunities that are seamlessly integrated and efficiently available to users in a single content searching and/or usage activity.

Such a rights augmenting remote authority 1000 may be directly coupled to a DVD appliance 50 and/or other device by modem (see item 1006 in Figure 12) and/or directly or indirectly coupled through the use of an I/O interface, such as a serial 1394 compatible controller (e.g., by communicating between a 1394 enabled DVD appliance and a local personal computer that functions as a smart synchronous or asynchronous information communications interface to such one or more remote authorities, including a local PC 60 or NC 1022 that serves as a local rights management authority augmenting and/or supplying the rights management in a DVD appliance) and/or by other digital communication means such as wired and/or wireless network connections.

Rights provided to, purchased, or otherwise acquired by a participant and/or participant DVD appliance 50 or other system can be exchanged among such peer-to-peer relating devices and/or other systems so long as they participate in a permanently or temporarily connected network. 1020. In such a case, rights may be bartered, sold, for currency, otherwise exchanged for value, and/or loaned so long as such devices and/or other systems participate in a rights management system, for example, such as the Virtual Distribution Environment described in Ginter, et al., and employ rights transfer and other rights management capabilities described therein. For example, this aspect of the present invention allows parties to exchange games or movies in which they have purchased rights. Continuing the example, an individual might buy some of a neighbor's usage rights to watch a movie, or transfer to another party credit received from a game publisher for the successful superdistribution of the game to several acquaintances, where such credit is transferred (exchanged) to a friend to buy some of the friend's rights to play a different game a certain number of times, etc.

### Example Virtual Rights Process

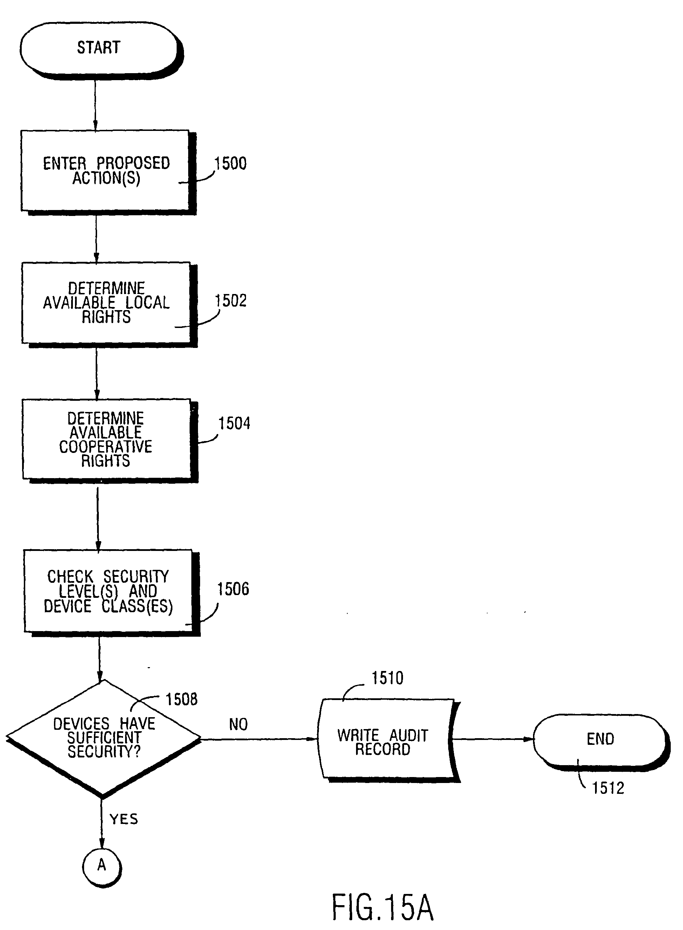

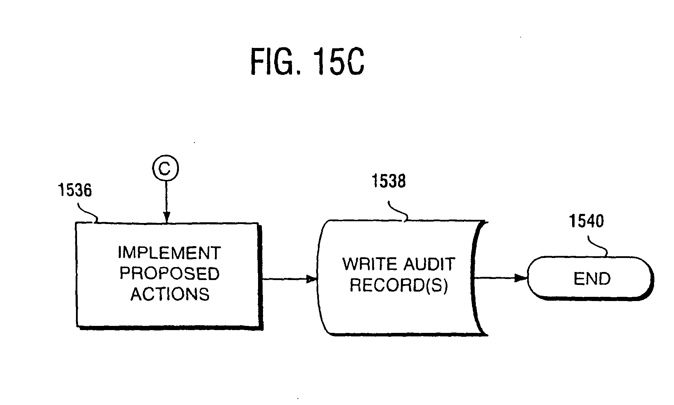

Figures 15A-15C shows an example of a process in which rights management components of two or more appliances or other devices establish a virtual rights machine environment associated with an event, operation and/or other action. The process may be initiated in a number of ways. In one example, an appliance user (and/or computer software acting on behalf of a user, group of users, and/or automated system for performing actions) performs an action with a first appliance (e.g., requesting the appliance to display the contents of a secure container, extract a portion of a content element, run a protected computer program, authorize a work flow process step, initiate an operation on a machine tool, play a song, etc.) that results in the activation of a rights management component associated with such first appliance (Figure 15A, block 1500). In other examples, the process may get started in response to an automatically generated event (e.g., based on a time of day or the like), a random or pseudo-random event, and/or a combination of such events with a user-initiated event.

Once the process begins, a rights management component such as a secure node 72 (for example, an SPE and/or HPE as disclosed in Ginter et al.) determines which rights associated with such first appliance, if any, the user has available with respect to such an action (Figure 15A, block 1502). The rights management component also determines the coordinating and/or cooperating rights associated with such an action available to the user located in whole or in part on other appliances (Figure 15A, block 1502).

In one example, these steps may be performed by securely delivering a request to a rights authority server 1000 that identifies the first appliance, the nature of the proposed action, and other information required or desired by such a rights authority server. Such other information may include, for example:
- the date and time of the request,
- the identity of the user,
- the nature of the network connection,
- the acceptable latency of a response, etc.), and/or
- any other information.

In response to such a request, the rights authority server 1000 may return a list (or other appropriate structure) to the first appliance. This list may, for example, contain the identities of other appliances that do, or may, have rights and/or rights related information relevant to such a proposed action.

In another embodiment, the first appliance may communicate (e.g., poll) a network with requests to other appliances that do, or may, have rights and/or rights related information relevant to such proposed action. Polling may be desirable in cases where the number of appliances is relatively small and/or changes infrequently. Polling may also be useful, for example, in cases where functions of a rights authority server 1000 are distributed across several appliances.

The rights management component associated with the first appliance may then, in this example, check the security level(s) (and/or types) of devices and/or users of other appliances that do, or may, have rights and/or rights related information relevant to such an action (Figure 15A, block 1506). This step may, for example, be performed in accordance with the security level(s) and/or device type management techniques disclosed in Sibert and Van Wie, and the user rights, secure name services and secure communications techniques disclosed in Ginter et al. Device and/or user security level determination may be based, for example, in whole or in part on device and/or user class.

The rights management component may then make a decision as to whether each of the other appliance devices and/or users have a sufficient security level to cooperate in forming the set of rights and/or rights related information associated with such an action (Figure 15A, block 1508). As each appliance is evaluated, some devices and/or users may have sufficient security levels, and others may not. In this example, if a sufficient security level is not available ("No" exit to decision block 1508), the rights management component may create an audit record (for example, an audit record of the form disclosed in Ginter et al.) (Figure 15A, block 1510), and may end the process (Figure 15A, block 1512). Such audit record may be for either immediate transmission to a responsible authority and/or for local storage and later transmission, for example. The audit recording step may include, as one example, incrementing a counter that records security level failures (such as the counters associated with summary services in Ginter et al.)

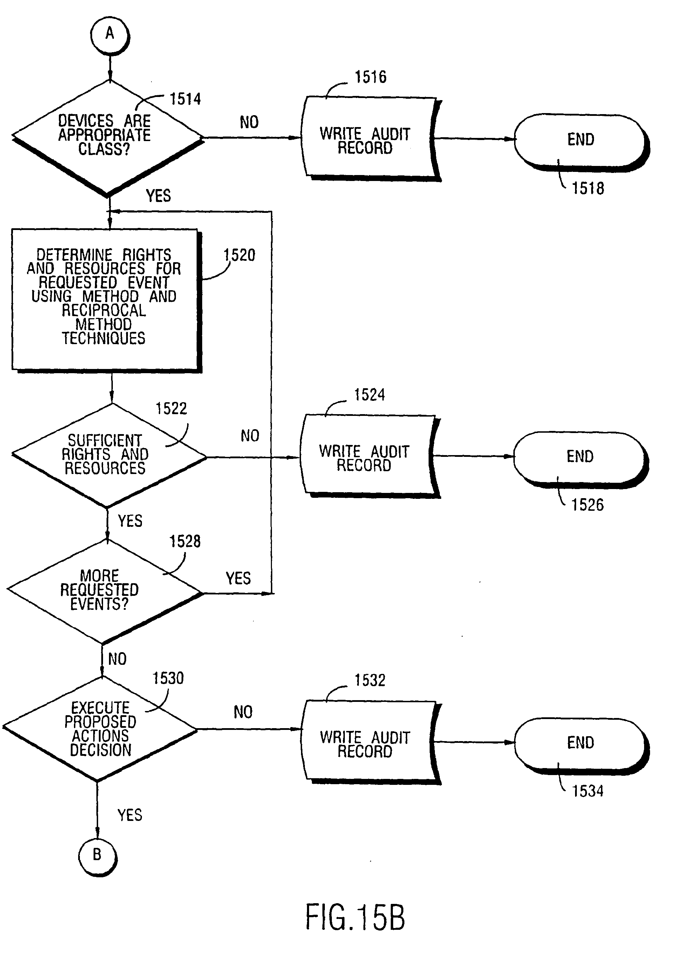

If the devices and/or users provide the requisite security level ("Yes" exit to block 1508), the rights management component in this example may make a further determination based on the device and/or user class(es) and/or other configuration and/or characteristics (Figure 15B, block 1514). Such determination may be based on any number of factors such as for example:
- the device is accessible only through a network interface that has insufficient throughput;
- devices in such a class typically have insufficient resources to perform the action, or relevant portion of the action, at all or with acceptable performance, quality, or other characteristics;
- the user class is inappropriate due to various conditions (e.g., age, security clearance, citizenship, jurisdiction, or any other class-based or other user characteristic); and/or
- other factors.

In one example, decision block 1514 may be performed in part by presenting a choice to the user that the user declines.

If processes within the rights management component determines that such device and/or user class(es) are inappropriate("No" exit to block 1514), the rights management component may write an audit record if required or desired (Figure 15B, block 1516) and the process may end (Figure 15B, block 1518).

If, on the other hand, the rights management component determines that the device and/or user classes are appropriate to proceed ("Yes" exit to block 1514), the rights management component may determine the rights and resources available for performing the action on the first appliance and the other appliances acting together (Figure 15B, block 1520). This step may be performed, for example, using any or all of the method processing techniques disclosed in Ginter et al. For example, method functions may include event processing capabilities that formulate a request to each relevant appliance that describes, in whole or in part, information related to the action, or portion of the action, potentially suitable for processing, in whole or in part, by such appliance. In this example, such requests, and associated responses, may be managed using the reciprocal method techniques disclosed in Ginter et al. If such interaction requires additional information, or results in ambiguity, the rights management component may, for example, communicate with the user and allow them to make a choice, such as making a choice among various available, functionally different options, and/or the rights management component may engage in a negotiation (for example, using the negotiation techniques disclosed in Ginter et al.) concerning resources, rights and/or rights related information.

The rights management component next determines whether there are sufficient rights and/or resources available to perform the requested action (Figure 15B, decision block 1522). If there are insufficient rights and/or resources available to perform the action ("No" exit to block 1522), the rights management component may write an audit record (Figure 15B, block 1524), and end the process (Figure 15B, block 1526).

In this example, if sufficient rights and/or resources are available ("Yes" exit to block 1522), the rights management component may make a decision regarding whether additional events should be processed in order to complete the overall action (Figure 15B, block 1528). For example, it may not be desirable to perform only part of the overall action if the necessary rights and/or resources are not available to complete the action. If more events are necessary and/or desired ("Yes" exit to block 1528), the rights management component may repeat blocks 1520, 1522 (and potentially perform blocks 1524, 1526) for each such event.

If sufficient rights and/or resources are available for each of the events ("No" exit to block 1528), the rights management component may, if desired or required, present a user with a choice concerning the available alternatives for rights and/or resources for performing the action (Figure 15B, block 1530). Alternatively and/or in addition, the rights management component may rely on user preference information (and/or defaults) to "automatically" make such a determination on behalf of the user (for example, based on the overall cost, performance, quality, etc.). In another embodiment, the user's class, or classes, may be used to filter or otherwise aid in selecting among available options. In still another embodiment, artificial intelligence (including, for example, expert systems techniques) may be used to aid in the selection among alternatives. In another embodiment, a mixture of any or all of the foregoing (and/or other) techniques may be used in the selection process.

If there are no acceptable alternatives for rights and/or resources, or because of other negative aspects of the selection process (e.g., a user presses a "Cancel" button in a graphical user interface, a user interaction process exceeds the available time to make such a selection, etc.), ("No" exit to block 1530) the rights management component may write an audit record (Figure 15B, block 1532), and end the process (Figure 15B, block 1534).

On the other hand, if a selection process identifies one or more acceptable sets of rights and/or resources for performing the action and the decision to proceed is affirmative ("Yes" exit to block 1530), the rights management component may perform the proposed action using the first appliance alone or in combination with any additional appliances (e.g., a rights authority 1000, or any other connected appliance) based on the selected rights and/or resources (Figure 15C, block 1536). Such cooperative implementation of the proposed actions may include for example:
- performing some or all of the action with the first appliance;
- performing some or all of the action with one or more appliances other than the first appliance (e.g., a rights authority 1000 and/or some other appliance);
- performing part of the action with the first appliance and part of the action with one or more other appliances; or
- any combination of these.

For example, this step may be performed using the event processing techniques disclosed in Ginter et al.

As one illustrative example, the first appliance may have all of the resources necessary to perform a particular task (e.g., read certain information from an optical disk), but may lack the rights necessary to do so. In such an instance, the first appliance may obtain the additional rights it requires to perform the task through the steps described above. In another illustrative example, the first appliance may have all of the rights required to perform a particular task, but it may not have the resources to do so. For example, the first appliance may not have sufficient hardware and/or software resources available to it for accessing, processing or otherwise using information in certain ways. In this example, step 1536 may be performed in whole or in part by some other appliance or appliances based in whole or in part on rights supplied by the first appliance. In still another example, the first appliance may lack both rights and resources necessary to perform a certain action, and may rely on one or more additional appliances to supply such resources and rights.

In this example, the rights management component may, upon completion of the action, write one or more audit records (Figure 15C, block 1538), and the process may end (Figure 15C, block 1540).

To summarise, the present invention may provide an electronic appliance including:
a disk use arrangement for at least one of (a) reading information from, and (b) writing information to, a digital versatile disk optical storage medium; and
a secure node coupled to the disk use arrangement, the secure node providing at least one rights management process.

The present invention may also provide an electronic appliance including:
a disk use arrangement for at least one of (a) reading information from, and (b) writing information to, a digital versatile disk optical storage medium; and
at least one processing arrangement coupled to the disk use arrangement, the processing arrangement selecting at least some control information associated with information recorded on the storage medium based at least in part on the class of the appliance and/or the user of the appliance.

The processing arrangement may select a subset of control information used on another appliance and/or class of appliance. The processing arrangement may select different control information from the information selected by another appliance and/or class of appliance. At least some of the control information may comprise an analog signal and at least some of the control information may comprise digitally encoded information.

In an appliance capable of using digital versatile disks, the present invention may provide a method including the following steps:
at least one of (a) reading information from, and (b) writing information to, a digital versatile disk optical storage medium; and selecting at least some control information associated with information recorded on the storage medium based at least in part on the class of the appliance and/or the user of the appliance.

The selecting step may include the step of selecting a subset of control information used on another appliance and/or class of appliance.

The selecting step may also include the step of selecting, from control information stored on the storage medium, a different set of control information than the control information selected by another appliance and/or class of appliance.

The present invention may also provide an electronic appliance including:
a disk use arrangement for reading information from a digital versatile disk optical storage medium; and at least one processing arrangement coupled to the disk use arrangement, the processing arrangement protecting information read from the storage medium.

The processing arrangement may include a rights management arrangement that applies at least one rights management technique to the read information.

The appliance may further include at least one port compliant at least in part with the IEEE 1394-1995 high speed serial bus standard, and the processing arrangement may couple the protected information to the port.

The present invention may also provide a method including the following steps in an electronic appliance:
reading information from a digital versatile disk optical storage medium; and
protecting the information read from the optical storage medium.

The protecting step may include the step of applying at least one rights management technique to the read information.

The present invention may optionally further include the step of sending the protected information to an IEEE 1394 port.

The present invention may also provide an electronic appliance including:
a disk use arrangement for using information stored, or to be stored, on a digital versatile disk optical storage medium; and at least one protecting arrangement coupled
to the disk use arrangement and also coupled to receive at least one analog signal, the protecting arrangement creating protected digital information based at least in part on the analog signal.

The present invention may also provide a method including the following steps in an electronic appliance:
receiving at least one analog signal; and creating protected digital content based at least in part on the analog signal for storage on a digital versatile disk.

The present invention may also provide a method including the following steps in an electronic appliance:
reading at least one analog signal from a digital versatile disk; creating protected digital content based at least in part on the analog signal; and outputting the protected digital content.

The present invention may also provide an electronic appliance including:
a disk use arrangement for using information stored, or to be stored, on a digital versatile disk optical storage medium; and at least one rights management arrangement coupled to the disk use arrangement, the rights management arrangement treating the storage medium and/or information obtained from the storage medium differently depending on the geographical and/or jurisdictional context of the appliance.

The present invention may also provide a method including the following steps in an electronic appliance:
reading information from at least one digital versatile disk; and performing at least one rights management operation based at least in part on the geographical and/or jurisdictional context of the appliance.

The present invention may also provide an electronic appliance including:
a disk use arrangement for using at least one secure container stored on a digital versatile disk optical storage medium; and at least one rights management arrangement coupled to the disk use arrangement, the rights management arrangement processing the secure container.

The present invention may also provide a method in an electronic appliance including the following steps:
reading at least one secure container from at least one digital versatile disk; and
performing at least one rights management operation on the secure container.

The present invention may also provide an electronic appliance including:
at least one rights management arrangement for generating and/or modifying at least one secure container for storage onto a digital versatile disk optical storage medium.

The present invention may also provide a method in an electronic appliance including the step of performing at least one rights management operation on at least one secure container for storage onto a digital versatile disk optical storage medium.

The present invention may also provide a digital versatile disk use system and/or method characterized in that the system and/or method uses at least one secure container.

The present invention may also provide a digital versatile disk use system and/or method characterized in that the system and/or method uses at least one secure container of the type disclosed in PCT Publication No. WO 96/27155.

The present invention may also provide an electronic appliance including:
a disk use arrangement for writing information onto and/or reading information from
a digital versatile disk optical storage medium; and a secure arrangement that securely manages information on the storage medium such that at least a first portion of the information may be used on at least a first class of appliance while at least a second portion of the information may be used on at least a second class of appliance.

The present invention may also provide a method in an electronic appliance, including the following steps:
reading information from and/or writing information to at least one digital versatile disk optical storage medium; using at least a first portion of the information on at least a first class of appliance; and using at least a second portion of the information on at least a second class of appliance.

The present invention may also provide a system including first and second classes of electronic appliances each including a secure processing arrangement, the first appliance class secure arrangement securely managing and/or using at least a first portion of the information, the second appliance class secure arrangement securely managing and/or using at least a second portion of the information.

The first and second information portions may be different, and the second appliance class secure arrangement may not use the first information portion.

The first appliance class may not use the second information portion.

The present invention may also provide a method, in a system including first and second classes, of electronic appliances each including a secure arrangement, comprising:
(a) securely managing and/or using at least a first portion of the information with the first appliance class secure arrangement, and
(b) securely managing and/or using at least a second portion of the information with the second appliance class secure arrangement.

The first and second information portions may be different, and step (b) may not use the first information portion. Step (a) may not use the second information portion.

The present invention may also provide an electronic appliance including:
a disk use arrangement for writing information onto and/or reading information from
a digital versatile disk optical storage medium; and a secure arrangement that securely stores and/or transmits information associated with at least one of payment, auditing, controlling and/or otherwise managing content recorded on the storage medium.

The present invention may also provide a method in an electronic appliance, including the following steps:
reading information from and/or writing information to at least one digital versatile disk optical storage medium; and securely storing and/or transmitting information associated with at least one of payment, auditing, controlling and/or otherwise managing content recorded on the storage medium.

The present invention may also provide an electronic appliance including:
a disk use arrangement for writing information onto and/or reading information from a digital versatile disk optical storage medium; a cryptographic engine coupled to the disk use arrangement, the engine using at least one cryptographic key; and a secure arrangement that securely updates and/or replaces at least one cryptographic key used by the cryptographic engine to at least in part modify the scope of information usable by the appliance.

The present invention may also provide a method of operating an electronic appliance including:
writing information onto and/or reading information from a digital versatile disk optical storage medium; using at least one cryptographic key in conjunction with said information; and securely updating and/or replacing at least one cryptographic key used by the cryptographic engine to at least in part modify the scope of information useable by the appliance.

The present invention may also provide a digital versatile disk appliance characterized in that at least one cryptographic key used by the appliance is securely updated and/or replaced to at least in part modify the scope of information that can be used by the appliance.

The key updating and/or replacing may be based on class of appliance.

The present invention may also provide an electronic appliance having a class associated therewith, characterized in that at least one cryptographic key set used by the appliance class is selected to help ensure security of information released from at least one digital versatile disk.

The present invention may also provide a digital camera for generating at least one image to be written onto a digital versatile disk optical storage medium, characterized in that the camera includes at least one information protecting arrangement that at least in part protects the image so that the information is persistently protected through subsequent processes such as editing, production, writing onto a digital versatile disk, and/or reading from a digital versatile disk.

The present invention may also provide a digital camera for generating image information that can be written onto a digital versatile disk optical storage medium, a method comprising:
capturing at least one image with a digital camera; and protecting information provided by the digital camera so that the information is selectively persistently protected through subsequent processes such as distribution, editing and/or production, writing onto the digital versatile disk optical storage medium, and/or reading from the digital versatile disk optical storage medium.

The present invention may also provide a method, in an electronic appliance including a disk use arrangement, comprising:
reading information from at least one digital versatile disk optical storage medium;
and persistently protecting at least some of the read information through at least one subsequent editing and/or production process.

The present invention may also provide a method in an electronic appliance including the following steps:
reading information from and/or writing information to at least one digital versatile disk optical storage medium; and securely managing information on the storage medium, including the step of using at least a first portion of the information on at least a first class of appliance, and using at least a second portion of the information on at least a second class of appliance.

The present invention may also provide a method of providing copy protection and/or use rights management of at least one digital property content and/or secure container to be stored and/or distributed on a digital versatile disk medium, comprising the step(s) of:
providing a set of use control(s) within a cryptographically encapsulated data structure having a predetermined format, the data structure format defining at least one secure software container for providing use rights information for digital property content to be stored on the digital versatile disk medium.

The present invention may optionally provide the step of using at least one digital property content stored on an optical disk in accordance with the use controls, also optionally including the step of using a prescribed secure cryptographic key or set of cryptographic keys for using rights information.

The present invention may optionally provide the step of decrypting control rules and/or other selected encrypted information content encapsulated in the software container using at least one set of cryptographic keys.

The present invention may optionally provide the step of applying decrypted control rules to regulate use in accordance with control information contained within said control rules, so as to facilitate management of a diverse set of use and distribution rights which may be specific to different users and/or optical disk appliances.

The secure container data structure may comprise:
one or more content objects comprising digital property content; and one or more control objects comprising a set of control rules defining copy protection, use and
distribution rights to digital property content stored on the optical disk.

A content object may further comprise one or more reference pointers to digital property content stored elsewhere on the digital versatile disk.

Digital information stored on said optical disk may include one or more metadata blocks comprising further information used in conjunction with the control rules to use digital property content stored elsewhere on the optical disk. A metablock may be either of a protected type or of an unprotected type.

The present invention may also provide an arrangement for implementing a rights management system for controlling copy protection, use and/or distribution rights to multi-media digital property content stored or otherwise contained on a digital versatile disk, comprising:
an encrypted data structure defining a secure information container stored on an optical disk medium, the encrypted data structure including and/or referencing at least one content object and at least one control object associated with the content object, said content object comprising digital property content and said control object comprising rules defining use rights to the digital property content.
   A content object may further comprise one or more reference pointers to digital property content stored elsewhere on the digital versatile disk.

A control object may further comprise:
one or more reference pointers to control information stored elsewhere on the digital versatile disk; information for controlling various operations of an optical disk appliance or computer; information for controlling various operations of an optical disk appliance or computer; a rule specifying decoding and/or enforcement of CGMA encoded copy protection rules associated with the digital content property; a rule specifying at least one content scrambling system compatible encoding/decoding of digital property content.

The optical disk may contain:
a block of stored information comprising encrypted keys used for decryption of said encrypted data structure; a block of stored information comprising hidden keys used for decryption of said encrypted keys.

A content object may further comprise one or more reference pointers to digital property content stored on a separate storage medium.

The present invention may also provide a rights management system for providing copy protection, use and/or distribution rights management for multimedia digital property content stored or otherwise contained on a digital versatile disk for access by an optical disk player device that uses digital property content stored on said optical disk medium, wherein said appliance includes a microprocessor controller for decrypting and using control rules and other selected encrypted information content encapsulated in the secure container by using a prescribed cryptographic key and applying said decrypted control rules to regulate use in accordance with control information contained within said control rules, so as to facilitate management of a diverse set of use and/or distribution rights which may be specific to different users and/or optical disk appliances, the system including:
an optical disk medium having stored thereon an encrypted data structure defining a secure information container, the encrypted data structure comprising and/or referencing at least one content object and at least one control object, said content object comprising digital property content, said control object comprising rules defining use rights associated with the digital property.

The present invention may also provide a method for providing copy protection, use and distribution rights management of multi-media digital property stored on and/or distributed via digital versatile disk, said optical disk medium having stored thereon an encrypted data structure defining a secure container for.housing rights and/or copy protection information pertaining to digital property content stored on the optical disk, wherein an optical disk player appliance for using digital property content stored on an optical disk must utilize a prescribed secure cryptographic key or set of keys to use the secure container, said data structure comprising one or more content objects comprising digital property content and one or more control objects comprising a set of rules defining use rights to digital property, comprising the steps of:
(a) decrypting control rules and other selected encrypted information content encapsulated in the secure container using one or more cryptographic keys; and
(b) applying decrypted control rules to regulate use and/or distribution of digital property content stored on the optical disk in accordance with control information contained within the control rules, so as to provide customized use and/or distribution rights that are specific to different optical disk user platforms and/or optical disk appliances.

The present invention may also provide a rights management system for providing copy protection, use and/or distribution rights management of digital property stored or otherwise contained on a digital versatile disk, comprising:
a secure container means provided on an optical disk medium for cryptographically encapsulating digital property content stored on the optical disk, said container means comprising a content object means for containing digital property content and a control object means for containing control rules for regulating use and/or distribution of said digital property content stored on the optical disk.

An optical disk player appliance for using information stored on an optical disk may comprise a secure node means for using said secure container means provided on an optical disk and implementing said control rules to control operation of said player appliance to regulate use of said digital property content.

The present invention may also provide a rights authority broker in a system including plural electronic appliances at least temporarily connected to one another. The rights authority broker determining what appliances are connected and specifying at least one rights management context depending on said determination.

The present invention may also provide an electronic appliance at least temporarily connected to a rights authority broker, the electronic appliance receiving at least one rights context from the rights authority broker when the device is connected to the rights authority broker.

The present invention may also provide a first electronic appliance at least temporarily connected to a second electronic appliance, the first electronic appliance selecting between at least first and second rights management contexts depending at least in part on whether the first appliance is connected to the second electronic appliance.

The present invention may also provide an arrangement, in a system including first and second electronic appliances that may be selectively coupled to communicate with one another. The arrangement is for defining at least one different rights management control based at least in part on whether the first and second electronic appliances are connected.

The present invention may also provide a method of defining at least one rights management context comprising:
(a) determining whether a first electronic appliance is present; and
(b) defining at least one rights management control set based at least in part on the determining step (a).

The present invention may also provide a method of defining at least one rights management context including:
(a) coupling an optical disk storing information to an electronic appliance that can be selectively connected to a rights management broker;
(b) determining whether the electronic appliance is currently coupled to a rights management broker; and
(c) conditioning at least one aspect of use of at least some of the information stored on the optical disk based on whether the electronic appliance is coupled to the rights management broker.

Step (c) may also include the step of obtaining at least one rights management context from the rights management broker; and step (c) may also include the step of obtaining at least one combined control set from the rights management broker.

The present invention may also provide a method of defining at least one rights management context including:
(a) coupling an optical disk storing information to an electronic appliance;
(b) using at least some of the information stored on the optical disk based on a first rights management context;
(c) coupling the electronic appliance to a rights management broker; and
(d) concurrently with step (c), using at least some of the information stored on the optical disk based on a second rights management context different from the first rights management context.

The present invention may also provide an electronic appliance including a secure node and an optical disk reader, the electronic appliance applying different rights management contexts to protected information stored on an optical disk coupled to the optical disk reader depending at least in part on whether the electronic appliance is coupled to at least one additional secure node.

The present invention may also provide an electronic appliance including:
an optical disk reading and/or writing arrangement; a secure node coupled to the optical disk reading and/or writing arrangement, the secure node performing at least one rights management related function with respect to at least some information read by the optical disk reading and/or writing arrangement; and at least one serial bus port coupled to the secure node, the serial bus port for providing any or all of the
functions, structures, protocols and/or methods of IEEE 1394-1995.

The present invention may also provide a digital versatile disk appliance including:
means for watermarking content; and serial bus means for communicating the watermarked content, wherein the serial bus means complies with IEEE 13941995.

The present invention may also provide an optical disk reading and/or writing device including:
at least one secure node capable of watermarking content and/or processing watermarked content; and an IEEE 1394-1995 serial bus port.

The present invention may also provide an optical disk using device comprising:
a secure processing unit, and an IEEE 1394-1995 serial bus port. The secure processing unit may includes a channel manager and the secure processing unit may execute a rights operating system in whole or in part.

The secure processing unit may include: a tamper-resistant barrier; the san encryption/decryption engine.

The present invention may also provide a rights cooperation method comprising:
(a) connecting an appliance to at least one further appliance;
(b) determining whether the first and/or further appliance and/or user(s) of said first and/or further appliance have appropriate rights and/or resources for performing an action; and
(c) selectively performing the action based at least in part on the determination.

The present invention may also provide a rights cooperation method comprising:
(a) connecting an appliance to at least one further appliance;
(b) determining whether the first and/or further appliance and/or user(s) of said first and/or further appliance have appropriate security for performing an action; and
(c) cooperating between the first and further appliance to selectively perform the action.

The present invention may also provide a cooperative rights management arrangement comprising:
a communications arrangement that allows at least first and second appliances to communicate; and an arrangement that processes at least one event based at least in part on assessing and/or pooling rights and/or resources between the first and second appliances.

In any of the above statements, the phrase "high capacity optical disk" may be substituted for "digital versatile disk".

The present invention may optionally provide a method of clearing or otherwise processing information resulting at least in part from one or more digital versatile disk appliances and/or methods as defined in any of the preceding statements.

The present invention may also optionally provide a system and/or method for defining rules for use in one or more digital versatile disk appliances and/or methods as defined in any of the preceding statements.

The present invention may also optionally provide a system and/or method for defining rules and associated content for use in one or more digital versatile disk appliances and/or methods as defined in any of the preceding statements.

The present invention may also optionally provide a system and/or method for producing an optical disk for use with one or more digital versatile disk appliances and/or methods as defined in any of the preceding statements.

The present invention may also optionally provide a system and/or method for clearing audit information from one or more appliances and/or methods as defined in any of the preceding statements.

The present invention may also provide at least one electronic appliance in an network that reads information from and/or writes information to at least one digital versatile disk optical storage medium, and securely communicates information associated with at least one of payment, auditing, usage, access, controlling and/or otherwise managing content recorded on the storage medium, a method of processing said communicated information including the step of generating at least one payment request and/or order based at least in part on the information.

The present invention may also provide a method of defining at least one control set for storage on a high capacity optical disk that can storage images, audio, text and/or other information, the high capacity optical disk for use by any of plural different electronic appliance types, the method including the step of specifying at least one control that provides different conditions and/or consequences depending upon at least one of the following:
electronic appliance class; electronic appliance security; electronic appliance user class; electronic appliance connectivity; electronic appliance resources; electronic appliance access to resources; and rights management cooperation between plural electronic appliances.

An arrangement has been described which adequately satisfies current entertainment industry requirements for a low cost, mass-produceable digital video disk or other high capacity disc copy protection scheme but which also provides enhanced, extensible rights management capabilities for more advanced and/or secure platforms and for cooperative rights management between devices of lessor, greater, and/or differing rights resources. While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the invention.

## Claims

1. A system for converting analog signals to digital signals with rights management protection, the system comprising:
a device configured to receive an analog signal, convert the analog signal to a digital signal, and write the digital signal to a storage medium, the device including a protected processing environment configured to detect analog control information embedded in the analog signal, generate digital control information based at least in part on the analog control information, and associate the digital control information with the digital signal.

2. The system of claim 1, in which the device is further configured to use the digital control information to govern at least one use of the digital signal.

3. The system of claim 1 or 2, in which the protected processing environment is configured to use the analog control information to govern conversion of the analog signal to the digital signal.

4. The system of claim 3, in which the device is adapted to write the digital signal to the storage medium in degraded quality in accordance with the analog control information.

5. The system of any of the preceding claims, in which the protected processing environment is configured to generate additional digital control information and associate the additional digital control information with the digital signal.

6. The system of any of the preceding claims, in which the analog signal comprises one or more watermarks containing the analog control information.

7. The system of any of the preceding claims, in which the protected processing environment comprises a secure processing unit.

8. The system of any of the preceding claims, in which the storage medium is a digital versatile disk.

9. The system of any of the preceding claims wherein the digital control information includes one or more controls selected from a group consisting of: a control that prohibits copying of protected information, a control that allows protected information to be copied only once, a control that allows protected information to be copied multiple times, a control that allows a user or a class of users to play protected information, and a control that allows a user or a class of users to extract or excerpt at least a part of some protected information.

10. The system of any of the preceding claims, in which digital control information includes a requirement that the protected information can only be released to one or more types of devices.

11. The system of claim 10, in which the one or more types of devices includes devices that are not configured to copy the protected information.

12. The system of claim 10 or 11, in which the one or more types of devices includes devices that include a rights management component configured to enforce at least part of the digital control information.

13. The system of any of the preceding claims, in which the digital control information includes a requirement that protected information be fingerprinted prior to release by the system.

14. The system of any of the preceding claims, in which the digital control information includes a requirement that copies of protected information be degraded in quality.

15. A method of converting analog signals to digital signals with rights management protection, the method comprising:
detecting analog control information embedded in an analog signal;
converting the analog signal to a digital signal;
generating digital control information based at least in part on the analog control information;
securely associating the digital control information with the digital signal; and
writing the digital signal and the digital control information to a storage medium.

16. The method of claim 15, further comprising:
receiving a request to use the digital signal; and
selectively granting the request based at least in part on the digital control information.

17. The method of claim 15 or 16, further comprising: packaging the digital signal and the digital control information in a secure electronic container, and in which the step of writing the digital signal and the digital control information to the storage medium comprises writing the secure electronic container to the storage medium.

18. The method of any of claims 15-17, further comprising generating additional digital control information; and associating the additional digital control information with the digital signal.

19. The method of any of claims 15-18, in which converting the analog signal to the digital signal is performed in accordance with the analog control information.

20. The method of any of claims 15-19, in which writing the digital signal and the digital control information to a storage medium comprises writing the digital signal in degraded quality.

21. The method of any of claims 15-20, in which the analog signal comprises one or more watermarks containing the analog control information.

22. The method of any of claims 15-21 wherein the digital control information includes one or more controls selected from a group consisting of: a control that prohibits copying of protected information, a control that allows protected information to be copied only once, a control that allows protected information to be copied multiple times, a control that allows a user or a class of users to play protected information, and a control that allows a user or a class of users to extract or excerpt at least a part of some protected information.

23. A system for converting digital signals to analog signals with rights management protection, the system comprising:
a device configured to receive a digital signal and convert the digital signal to an analog signal, the device including a protected processing environment configured to detect digital control information associated with the digital signal, generate analog control information based at least in part on the digital control information, and embed the analog control information in the analog signal.

24. The system of claim 23, in which the protected processing environment comprises a secure processing unit.

25. The system of claim 23 or 24, in which the protected processing environment is configured to enforce the digital control information associated with the digital signal when converting the digital signal to an analog signal.

26. The system of any of claims 23-25, in which the analog control information is embedded in the analog signal via one or more watermarks and/or fingerprints.

27. The system of any of claims 23-26, in which the device is further configured to write the analog signal to a storage medium.

28. The system of claim 27, in which the storage medium comprises a VHS tape.

29. The system of any of claims 23-28 wherein the digital control information includes one or more controls selected from a group consisting of: a control that prohibits copying of protected information, a control that allows protected information to be copied only once, a control that allows protected information to be copied multiple times, a control that allows a user or a class of users to play protected information, and a control that allows a user or a class of users to extract or excerpt at least a part of some protected information.

30. A method of converting digital content to analog content with rights management protection, the method comprising:
detecting first digital control information associated with a first digital content item, the first digital control information including one or more rules specifying one or more permitted uses of the first digital content item;
converting the first digital content item to an analog content item, including:
generating analog control information based at least in part on the first digital control information, the analog control information including at least one rule specifying at least one of the one or more permitted uses specified by the first digital control information; and
securely associating the analog control information with the analog content item.

31. The method of claim 30, in which the step of converting the first digital content item to an analog content item is performed in accordance with the first digital control information.

32. The method of claim 30 or 31, further comprising:
writing the analog content item and the analog control information to a storage medium.

33. The method of any of claims 30-32, in which the step of securely associating the analog control information with the analog content item comprises inserting one or more watermarks and/or fingerprints in the analog content item, the one or more watermarks and/or fingerprints containing at least part of the analog control information.

34. The method of any of claims 30-33, further comprising:
converting the analog content item to a second digital content item;
generating second digital control information based at least in part on the analog control information;
securely associating the second digital control information with the second digital content item; and
writing the second digital content item and the second digital control information to a storage medium.

35. The method of claim 34, further comprising:
receiving a request to use the second digital content item;
selectively granting the request based at least in part on the second digital control information.

36. The method of any of claims 30-35, further comprising:
receiving a request to use the analog content item;
selectively granting the request based at least in part on the analog control information.

37. The method of any of claims 30-36 wherein the digital control information includes one or more controls selected from a group consisting of: a control that prohibits copying of protected information, a control that allows protected information to be copied only once, a control that allows protected information to be copied multiple times, a control that allows a user or a class of users to play protected information, and a control that allows a user or a class of users to extract or excerpt at least a part of some protected information.
